# EUROPEAN PATENT APPLICATION

(11) **EP 4 845 222 A1**
(43) Date of publication of application: **25.11.2026**
(21) Application number: 25761110.3
(22) Date of filing: 28.02.2025
(51) Int. Cl.: H04W 36/00

(54) **COMMUNICATION METHOD AND COMMUNICATION APPARATUS**

(30) Priority: 01.03.2024 CN 202410239993
(71) Applicant: Huawei Technologies Co., Ltd., Shenzhen, Guangdong 518129 (CN)
(72) Inventor: HUANG, Guogang, Shenzhen, Guangdong 518129 (CN); ZHAO, Yue, Shenzhen, Guangdong 518129 (CN); GUO, Yuchen, Shenzhen, Guangdong 518129 (CN); GAN, Ming, Shenzhen, Guangdong 518129 (CN)
(74) Representative: Epping - Hermann - Fischer
(86) International application number: PCT/CN2025/079772
(87) International publication number: WO 2025/180478

(57) **Abstract**

Embodiments of this application provide a communication method and a communication apparatus. The method includes: A first AP MLD receives a first frame, where the first frame is used to request to transfer one or more contexts of a non-AP MLD to a second AP MLD, and the non-AP MLD is associated with the first AP MLD; the first AP MLD transfers a data path of the non-AP MLD to the second AP MLD based on the first frame; and after the data path of the non-AP MLD is transferred to the second AP MLD, the first AP MLD transfers the one or more contexts of the non-AP MLD to the second AP MLD based on the first frame. According to the method, the data path of the non-AP MLD can be switched to a target AP MLD before the context is transferred, to reduce a data amount during data transmission, thereby reducing transmission overheads.

## Description

This application claims priority to Chinese Patent Application No. 202410239993.1, filed with the China National Intellectual Property Administration on March 1, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

Wireless local area network (wireless local area network, WLAN) roaming or Wi-Fi roaming is a process in which a wireless terminal or a station (station, STA) transfers from one access point (access point, AP) to another AP, that is, the wireless terminal or the STA moves from one basic service set (basic service set, BSS) to another BSS for access. The concept of a multi-link device (multi-link device, MLD) is proposed in protocols applied to WLANs. The MLD may be an access point multi-link device (access point MLD, AP MLD), or may be a non-access point MLD (non-AP MLD).

However, in a roaming process of a non-AP MLD, a data amount during data transmission that needs to be performed by a current AP MLD is large, increasing transmission overheads.

### SUMMARY

This application provides a communication method and a communication apparatus, so that a data path of a non-AP MLD can be switched to a target AP MLD before a context is transferred, to reduce a data amount during data forwarding, thereby reducing transmission overheads. According to a first aspect, a communication method is provided. The method includes: A first access point multi-link device AP MLD receives a first frame, where the first frame is used to request to transfer one or more contexts of a non-access point multi-link device non-AP MLD to a second AP MLD, and the non-AP MLD is associated with the first AP MLD; the first AP MLD transfers a data path of the non-AP MLD to the second AP MLD based on the first frame; and after the data path of the non-AP MLD is transferred to the second AP MLD, the first AP MLD transfers the one or more contexts of the non-AP MLD to the second AP MLD based on the first frame.

It should be understood that the method according to the first aspect may be performed by the first AP MLD. In this application, the first AP MLD may be the first AP MLD itself, or may be a component (for example, a processor, a chip, or a chip system) in the first AP MLD, or may be a logical module or software for implementing all or a part of functions of the first AP MLD. This is not specifically limited herein in this application.

It should be understood that the first frame may be a seamless roaming request (Seamless Roaming Request) frame or a context transfer request (Context Transfer Request) frame, depending on a transmitter of the first frame. This is not limited in embodiments of this application.

It should be understood that the one or more contexts of the non-AP MLD may include a block acknowledgment session context and/or a security association context. This is not limited in embodiments of this application.

It should be noted that data transmission in embodiments of this application means that to-be-sent data is forwarded from an AP MLD 1 to an AP MLD 2 or another hot-standby (Hot-standby) AP MLD, and/or that the AP MLD 1 forwards received but discontinuous data packets to the AP MLD 2 or the another hot-standby AP MLD. The data transmission may also be equivalently replaced with data forwarding (data forwarding). This is not limited in embodiments of this application.

It should be understood that the first frame needs to be encrypted or protected, and a specific encryption manner or protection manner of the first frame is not limited in embodiments of this application.

Based on the foregoing solution, after receiving the first frame, the first AP MLD can first switch the data path of the non-AP MLD to the second AP MLD, and then transfer the one or more contexts of the non-AP MLD to the second AP MLD, to reduce a data amount during data forwarding that needs to be performed by the first AP MLD, thereby reducing transmission overheads.

With reference to the first aspect, in some implementations of the first aspect, that the first AP MLD transfers the data path of the non-AP MLD to the second AP MLD based on the first frame includes: The first AP MLD sends a second frame to a distributed system, where the second frame is used to transfer the data path of the non-AP MLD to the second AP MLD; or the first AP MLD sends the second frame to the second AP MLD, where the second frame is used to request the second AP MLD to send a third frame to the distributed system, and the third frame is used to transfer the data path of the non-AP MLD to the second AP MLD.

It should be understood that a specific name of the second frame is not limited in embodiments of this application. By way of example and not limitation, the second frame may be a DS-STA-Notify request primitive indicating move (MOVE), for the distributed system to transfer the data path of the non-AP MLD to the second AP MLD.

It should be understood that specific content carried in the second frame is not limited in embodiments of this application. For example, the second frame may include a MAC address of the non-AP MLD and a MAC address of the second AP MLD.

Based on the foregoing solution, the first AP MLD can indicate, by itself, the distributed system to transfer the data path of the non-AP MLD, or request the second AP MLD to transfer the data path of the non-AP MLD. The solution has high flexibility and strong applicability.

With reference to the first aspect, in some implementations of the first aspect, before the first AP MLD transfers the data path of the non-AP MLD to the second AP MLD based on the first frame, the method further includes: The first AP MLD stops sending uplink data to the distributed system. Based on the foregoing solution, the first AP MLD immediately stops sending the uplink data to the distributed system in response to the first frame, thereby reducing a data amount during subsequent data forwarding of the uplink data.

With reference to the first aspect, in some implementations of the first aspect, that the first AP MLD transfers the one or more contexts of the non-AP MLD to the second AP MLD based on the first frame includes: The first AP MLD sends a fourth frame to the second AP MLD, where the fourth frame includes information about the one or more contexts of the non-AP MLD.

It should be understood that a specific name of the fourth frame is not limited in embodiments of this application. For example, the fourth frame may be a context transfer response (Context Transfer Response) frame.

It should be understood that specific content of the information about the context carried in the fourth frame is not limited in embodiments of this application.

By way of example and not limitation, context information of an uplink TID carried in the fourth frame may include at least one of the following: the MAC address of the non-AP MLD, a DL TID traffic identifier, a block acknowledgment policy, whether MSDU aggregation is allowed, whether a fragmentation operation is allowed, whether an HE fragmentation operation is supported, WinStart_O (a window start location) and WinSize_O (a window size) of a transmit buffer, or a status indicating whether each MPDU in a window is successfully sent and a quantity of retransmissions of the MPDU.

By way of example and not limitation, context information of an uplink TID carried in the fourth frame may include at least one of the following: the MAC address of the non-AP MLD, the UL TID traffic identifier, a block acknowledgment policy, whether MSDU aggregation is allowed, whether a fragmentation operation is allowed, whether an HE fragmentation operation is supported, a receiver scoreboard bitmap, WinStart_R (a window start location) and WinSize_R (a window size), WinStart_B (a window start location) and WinSize_B (a window size) of a receive reordering buffer, or a replay counter.

It should be understood that the fourth frame may further carry a status code to indicate whether the one or more contexts of the non-AP MLD are successfully transferred.

Based on the foregoing solution, after transferring the data path of the non-AP MLD to the second AP MLD, the first AP MLD can transfer the one or more contexts of the non-AP MLD to the second AP MLD by using the second frame.

With reference to the first aspect, in some implementations of the first aspect, the first frame includes at least one of the following: a first field, where the first field indicates to transfer all or a part of the contexts of the non-AP MLD; a second field, where the second field indicates whether to perform data transmission of the uplink data and/or downlink data; or a third field, where the third field indicates whether to transfer the security association context to the second AP MLD. By way of example and not limitation, the first field may be a non-default transfer (non-default transfer) field. Specifically, the non-default transfer field being set to 0 may indicate to transfer all of the contexts between the non-AP MLD and the first AP MLD. The non-default transfer field being set to 1 may indicate to transfer the part of the contexts between the non-AP MLD and the first AP MLD.

By way of example and not limitation, the second field being set to 1 may indicate to perform data transmission, and the second field being set to 0 may indicate not to perform data transmission.

It should be understood that the data transmission may be understood as data transmission of the uplink data and/or data transmission of the downlink data. In other words, the second field may indicate whether to perform data transmission of the downlink data, or the second field may indicate whether to perform data transmission of the uplink data, or the second field may indicate whether to perform data transmission of the uplink data and data transmission of the downlink data. The downlink data may be understood as data in the transmit buffer of the first AP MLD, and the uplink data may be understood as data in the reordering buffer of the first AP MLD.

It should be understood that, when the second field indicates only whether to perform data transmission of the uplink data or the downlink data, the first frame may further carry an additional field #1 indicating whether to perform data transmission of another type of data. For example, when the second field indicates whether to perform data transmission of the downlink data, the first frame may further include the field #1 to indicate whether to perform data transmission of the uplink data.

It should be noted that, when performing data transmission of the downlink data and/or data transmission of the uplink data, the first AP MLD needs to include, in a data frame, a sequence number and an end marker (End Marker) that correspond to each MAC service data unit (MAC Service Data Unit, MSDU). The end marker may indicate that data transmission of the downlink data ends, and/or that data transmission of the uplink data ends.

By way of example and not limitation, the third field may indicate whether to transfer a pairwise transient key security association (pairwise transient key security association, PTKSA) context. Specifically, when the third field is set to 1, the third field may indicate that the PTKSA context needs to be transferred to the second AP MLD. When the third field is set to 0, the third field may indicate not to transfer the PTKSA context to the second AP MLD.

It should be understood that specific content of the PTKSA context is not limited in embodiments of this application. For example, the PTKSA context may include a parameter like a PTK, a packet number counter (Packet Number Counter, PN Counter), or a replay counter (Replay Counter). Based on the foregoing solution, the first frame can include the at least one of the first field, the second field, or the third field, so that the first AP MLD can accurately transfer the context based on the first frame, thereby improving context transfer efficiency.

With reference to the first aspect, in some implementations of the first aspect, when the first frame includes the first field, and the first field indicates to transfer the part of the contexts of the non-AP MLD, the first frame further includes a fourth field, the fourth field includes a plurality of bits, each bit corresponds to one traffic type, and each bit indicates whether a context of the corresponding traffic type needs to be transferred.

In other words, each bit in the fourth field may indicate whether the context of the corresponding traffic type needs to be transferred.

By way of example and not limitation, the fourth field may include a downlink (Downlink, DL) TID bitmap field indicating that a context of one or more downlink TIDs needs to be transferred. By way of example and not limitation, the fourth field may further carry an uplink (Uplink, UL) TID bitmap field indicating that a context of one or more uplink TIDs needs to be transferred. Based on the foregoing solution, the first frame can include the fourth field, to indicate the first AP MLD to transfer an indicated specific context, thereby improving context transfer flexibility and reducing overheads.

With reference to the first aspect, in some implementations of the first aspect, when the first frame includes the third field, and the third field indicates to transfer the security association context to the second AP MLD, the one or more contexts of the non-AP MLD include the security association context.

With reference to the first aspect, in some implementations of the first aspect, that the first AP MLD receives the first frame includes: The first AP MLD receives the first frame from the non-AP MLD; or the first AP MLD receives the first frame from the second AP MLD.

Based on the foregoing solution, an action of transferring the data path and the one or more contexts of the non-AP MLD by the first AP MLD can be triggered by the non-AP MLD or the second AP MLD. The solution has high flexibility and strong applicability.

With reference to the first aspect, in some implementations of the first aspect, the first frame includes a fifth field; and the first frame is from the non-AP MLD, and the fifth field indicates an address of the second AP MLD; or the first frame is from the second AP MLD, and the fifth field indicates an address of the non-AP MLD.

With reference to the first aspect, in some implementations of the first aspect, the first frame is from the non-AP MLD, and the method further includes: The first AP MLD sends a fifth frame to the non-AP MLD, where the fifth frame indicates that the one or more contexts of the non-AP MLD are successfully transferred.

It should be understood that a specific name of the fifth frame is not limited in embodiments of this application. For example, the fifth frame may be a seamless roaming response (Seamless Roaming Response) frame.

It should be understood that the fifth frame may carry a status code to indicate whether the one or more contexts of the non-AP MLD are successfully transferred.

Based on the foregoing solution, the first AP MLD can send the fifth frame to the non-AP MLD to indicate that the one or more contexts of the non-AP MLD are successfully transferred, thereby improving context transfer efficiency.

With reference to the first aspect, in some implementations of the first aspect, the fifth frame includes a sixth field, and the sixth field indicates to remove one or more links between the first AP MLD and the non-AP MLD.

Based on the foregoing solution, the first AP MLD can further send the sixth field to the non-AP MLD by using the fifth frame, to indicate to remove the one or more links between the first AP MLD and the non-AP MLD, thereby reducing signaling overheads.

With reference to the first aspect, in some implementations of the first aspect, the first frame further includes a seventh field, and the seventh field indicates to switch one or more links between the second AP MLD and the non-AP MLD to an active mode.

With reference to the first aspect, in some implementations of the first aspect, the method further includes:
the first AP MLD sends a sixth frame to the non-AP MLD, where the sixth frame indicates that buffered data of the first AP MLD has been transmitted, or the sixth frame is used to request to delete the one or more links between the first AP MLD and the non-AP MLD.

It should be understood that a specific manner in which the sixth frame indicates to remove all or a part of the links between the non-AP MLD and the first AP MLD is not limited in embodiments of this application.

By way of example and not limitation, the sixth frame may indicate, by using a 1-bit field, whether to remove all of the links between the non-AP MLD and the first AP MLD. Specifically, the field being set to 0 indicates not to remove all of the links between the non-AP MLD and the first AP MLD; and the field being set to 1 indicates to remove all of the links between the non-AP MLD and the first AP MLD.

By way of example and not limitation, the sixth frame may indicate, by using a multi-bit field, whether to remove all or the part of the links between the non-AP MLD and the first AP MLD, and when the part of the links needs to be removed, the sixth frame indicates that a specific link between the non-AP MLD and the first AP MLD needs to be removed.

It should be understood that the non-AP MLD may reuse an existing frame, for example, a link reconfiguration request/response (Link Reconfiguration Request/Response) frame, as the sixth frame, or the non-AP MLD may use an additionally designed frame as the sixth frame. This is not limited in embodiments of this application.

Based on the foregoing solution, after completing transmission of the buffered data, the first AP MLD can actively send the sixth frame to the non-AP MLD, to remove the one or more links between the first AP MLD and the non-AP MLD, thereby shortening an interaction procedure and reducing signaling overheads.

According to a second aspect, a communication method is provided. The method includes: A second access point multi-link device AP MLD receives a seventh frame from a non-access point multi-link device non-AP MLD, where the seventh frame is used to request to transfer one or more contexts of the non-AP MLD to the second AP MLD, and the non-AP MLD is associated with a first AP MLD; the second AP MLD sends a first frame to the first AP MLD based on the first frame, where the first frame is used to request to transfer the one or more contexts of the non-AP MLD to the second AP MLD; and the second AP MLD receives a fourth frame after a data path of the non-AP MLD is transferred to the second AP MLD, where the fourth frame includes information about the one or more contexts of the non-AP MLD.

It should be understood that the method according to the second aspect may be performed by the second AP MLD. In this application, the second AP MLD may be the second AP MLD itself, or may be a component (for example, a processor, a chip, or a chip system) in the second AP MLD, or may be a logical module or software for implementing all or a part of functions of the second AP MLD. This is not specifically limited herein in this application.

It should be understood that the seventh frame may be a seamless roaming request (Seamless Roaming Request) frame, and the first frame may be a context transfer request (Context Transfer Request) frame. This is not limited in embodiments of this application.

It should be understood that the one or more contexts of the non-AP MLD may include a block acknowledgment session context and/or a security association context. This is not limited in embodiments of this application.

It should be understood that the first frame needs to be encrypted or protected, and a specific encryption manner or protection manner of the first frame is not limited in embodiments of this application.

Based on the foregoing solution, after receiving the seventh frame, the second AP MLD can send the first frame to the first AP MLD, so that the first AP MLD first switches the data path of the non-AP MLD to the second AP MLD, and then transfers the one or more contexts of the non-AP MLD to the second AP MLD, to reduce a data amount during data transmission that needs to be performed by the first AP MLD, thereby reducing transmission overheads.

With reference to the second aspect, in some implementations of the second aspect, the method further includes: The second AP MLD sends a fifth frame to the non-AP MLD, where the fifth frame indicates that the one or more contexts of the non-AP MLD are successfully transferred. With reference to the second aspect, in some implementations of the second aspect, the first frame includes at least one of the following: a first field, where the first field indicates to transfer all or a part of the contexts of the non-AP MLD; a second field, where the second field indicates whether to perform data transmission of uplink data and/or downlink data; or a third field, where the third field indicates whether to transfer the security association context to the second AP MLD.

With reference to the second aspect, in some implementations of the second aspect, when the first frame includes the first field, and the first field indicates to transfer the part of the contexts of the non-AP MLD, the first frame further includes a fourth field, the fourth field includes a plurality of bits, each bit corresponds to one traffic type, and each bit indicates whether a context of the corresponding traffic type needs to be transferred.

With reference to the second aspect, in some implementations of the second aspect, when the first frame includes the third field, and the third field indicates to transfer the security association context to the second AP MLD, the one or more contexts of the non-AP MLD include the security association context.

With reference to the second aspect, in some implementations of the second aspect, the fifth frame includes a sixth field, and the sixth field indicates to remove one or more links between the first AP MLD and the non-AP MLD.

With reference to the second aspect, in some implementations of the second aspect, the first frame further includes a seventh field, and the seventh field indicates to switch one or more links between the first AP MLD and the second AP MLD to an active mode.

With reference to the second aspect, in some implementations of the second aspect, the method further includes: The second AP MLD sends an eighth frame to the non-AP MLD, where the eighth frame is used to request to update the block acknowledgment context in the one or more contexts. It should be understood that a specific occasion on which the second AP MLD sends the eighth frame is not limited in embodiments of this application.

By way of example and not limitation, the second AP MLD may send the eighth frame to the non-AP MLD after receiving the foregoing response frame #2 or response frame #4.

By way of example and not limitation, the second AP MLD may send the eighth frame to the non-AP MLD after a specific time period in which the one or more contexts are used for data transmission. The specific time period is not limited in embodiments of this application.

It should be understood that the second AP MLD may reuse an existing frame as the eighth frame, or the second AP MLD may use an additionally designed frame as the eighth frame. This is not limited in embodiments of this application.

By way of example and not limitation, the eighth frame may be a multi-link operation update response (Multi-link Operation Update Response) frame. A dialog token field in the eighth frame is set to 0.

By way of example and not limitation, the eighth frame may be an unsolicited ADDBA request (Unsolicited ADDBA Request) frame.

By way of example and not limitation, the eighth frame may be a link reconfiguration response (Link Reconfiguration Response) frame. A dialog token field in the eighth frame is set to 0.

Based on the foregoing solution, after one or more sessions of the non-AP MLD are transferred to the second AP MLD, the second AP MLD can actively send the eighth frame, so that a specific parameter is updated without deleting a block acknowledgment session, and normal transmission between the second AP MLD and the non-AP MLD is maintained.

With reference to the second aspect, in some implementations of the second aspect, the eighth frame includes at least one of the following fields: an eighth field, where the eighth field indicates a buffer size of a corresponding block acknowledgment session; a ninth field, where the ninth field indicates whether a transmitter is allowed to send an aggregated MAC service data unit; a tenth field, where the tenth field indicates a block acknowledgment policy of the corresponding block acknowledgment session; an eleventh field, where the eleventh field indicates whether a fragmentation operation is allowed; a twelfth field, where the twelfth field indicates whether a high-efficiency fragmentation operation is supported; and a thirteenth field, where the thirteenth field indicates a timeout value of the corresponding block acknowledgment session.

Optionally, the eighth frame may further include a reserved field, to improve flexibility of updating a block acknowledgment session parameter by using the eighth frame.

It should be understood that a sequence of the fields in the eighth frame and a size of each field are not limited in embodiments of this application.

With reference to the second aspect, in some implementations of the second aspect, the eighth frame further includes a timer, and the timer indicates an effective time of the at least one field. Based on the foregoing solution, the eighth frame can include the timer, to indicate an effective time of a parameter in the eighth frame, thereby providing a preparation time for a receiver and the transmitter and avoiding impact on data transmission.

According to a third aspect, a communication method is provided. The method includes: A second access point multi-link device AP MLD receives a second frame from a first AP MLD, where the third frame is used to request to transfer a data path of a non-access point multi-link device non-AP MLD to the second AP MLD, and the non-AP MLD is associated with the first AP MLD; the second AP MLD transfers the data path of the non-AP MLD to the second AP MLD based on the third frame; and the second AP MLD receives a fourth frame after the data path of the non-AP MLD is transferred to the second AP MLD, where the fourth frame includes information about one or more contexts of the non-AP MLD.

It should be understood that the method according to the third aspect may be performed by the second AP MLD. In this application, the second AP MLD may be the second AP MLD itself, or may be a component (for example, a processor, a chip, or a chip system) in the second AP MLD, or may be a logical module or software for implementing all or a part of functions of the second AP MLD. This is not specifically limited herein in this application.

Based on the foregoing solution, the second AP MLD can be triggered by the first AP MLD, actively transfer the data path of the non-AP MLD to the second AP MLD via a distributed system, and then receive the fourth frame of the second AP MLD to complete transfer of the one or more contexts of the non-AP MLD, to reduce a data amount during data transmission that needs to be performed by the first AP MLD, thereby reducing transmission overheads.

With reference to the third aspect, in some implementations of the third aspect, before the second AP MLD receives the third frame from the first AP MLD, the method further includes: The second AP MLD receives a seventh frame from the non-AP MLD, where the first frame is used to request to transfer the one or more contexts of the non-AP MLD to the second AP MLD; and the second AP MLD sends a first frame to the first AP MLD based on the seventh frame, where the seventh frame is used to request to transfer the one or more contexts of the non-AP MLD to the second AP MLD.

With reference to the third aspect, in some implementations of the third aspect, the method further includes: The second AP MLD sends a fifth frame to the non-AP MLD, where the fifth frame indicates that the one or more contexts of the non-AP MLD are successfully transferred.

With reference to the third aspect, in some implementations of the third aspect, the first frame includes at least one of the following: a first field, where the first field indicates to transfer all or a part of the contexts of the non-AP MLD; a second field, where the second field indicates whether to perform data transmission of uplink data and/or downlink data; or a third field, where the third field indicates whether to transfer a security association context to the second AP MLD.

With reference to the third aspect, in some implementations of the third aspect, when the first frame includes the first field, and the first field indicates to transfer the part of the contexts of the non-AP MLD, the first frame further includes a fourth field, the fourth field includes a plurality of bits, each bit corresponds to one traffic type, and each bit indicates whether a context of the corresponding traffic type needs to be transferred.

With reference to the third aspect, in some implementations of the third aspect, when the first frame includes the third field, and the third field indicates to transfer the security association context to the second AP MLD, the one or more contexts of the non-AP MLD include the security association context.

With reference to the third aspect, in some implementations of the third aspect, the fifth frame includes a sixth field, and the sixth field indicates to remove one or more links between the first AP MLD and the non-AP MLD.

With reference to the third aspect, in some implementations of the third aspect, the first frame further includes a seventh field, and the seventh field indicates to switch one or more links between the first AP MLD and the second AP MLD to an active mode.

With reference to the third aspect, in some implementations of the third aspect, the method further includes: The second AP MLD sends an eighth frame to the non-AP MLD, where the eighth frame is used to request to update a block acknowledgment context in the one or more contexts.

With reference to the third aspect, in some implementations of the third aspect, the eighth frame includes at least one of the following fields: an eighth field, where the eighth field indicates a buffer size of a corresponding block acknowledgment session; a ninth field, where the ninth field indicates whether a transmitter is allowed to send an aggregated MAC service data unit; a tenth field, where the tenth field indicates a block acknowledgment policy of the corresponding block acknowledgment session; an eleventh field, where the eleventh field indicates whether a fragmentation operation is allowed; a twelfth field, where the twelfth field indicates whether a high-efficiency fragmentation operation is supported; and a thirteenth field, where the thirteenth field indicates a timeout value of the corresponding block acknowledgment session.

With reference to the third aspect, in some implementations of the third aspect, the eighth frame further includes a timer, and the timer indicates an effective time of the at least one field.

According to a fourth aspect, a communication method is provided. The method includes: A non-access point multi-link device non-AP MLD sends a first frame, where the first frame is used to request to transfer one or more contexts of the non-AP MLD to a second access point multi-link device AP MLD; and the non-AP MLD receives a fifth frame, where the fifth frame indicates that the one or more contexts of the non-AP MLD are successfully transferred.

It should be understood that the method according to the fourth aspect may be performed by the non-AP MLD. In this application, the non-AP MLD may be the non-AP MLD itself, or may be a component (for example, a processor, a chip, or a chip system) in the non-AP MLD, or may be a logical module or software for implementing all or a part of functions of the non-AP MLD. This is not specifically limited herein in this application.

It should be understood that the non-AP MLD may send the first frame to a first AP MLD, or the non-AP MLD may send the first frame to the second AP MLD. This is not limited in embodiments of this application. The first AP MLD is associated with the non-AP MLD.

It should be understood that the non-AP MLD may receive the fifth frame via the first AP MLD, or the non-AP MLD may receive the fifth frame via the second AP MLD. This is not limited in embodiments of this application.

It should be understood that an object to which the non-AP MLD sends the first frame may be the same as or different from an object that receives the fifth frame. This is not limited in embodiments of this application.

In a possible implementation, after sending the first frame, the non-AP MLD may stop sending uplink data to the distributed system.

According to a fifth aspect, a communication method is provided. The method includes: A non-access point multi-link device non-AP MLD sends a ninth frame to a second access point multi-link device AP MLD, where the ninth frame is used to request to establish a security association between the non-AP MLD and the second AP MLD, and a first AP MLD is associated with the non-AP MLD; the non-AP MLD receives a tenth frame from the second AP MLD, where the tenth frame indicates that the security association between the non-AP MLD and the second AP MLD is successfully established; and the non-AP MLD deletes a security association between the non-AP MLD and the first AP MLD based on the tenth frame.

It should be understood that the method according to the fifth aspect may be performed by the non-AP MLD. In this application, the non-AP MLD may be the non-AP MLD itself, or may be a component (for example, a processor, a chip, or a chip system) in the non-AP MLD, or may be a logical module or software for implementing all or a part of functions of the non-AP MLD. This is not specifically limited herein in this application.

It should be understood that the security association between the non-AP MLD and the first AP MLD or the second AP MLD is not limited in this application. For example, the security association may be a pairwise transient key security association (pairwise transient key security association, PTKSA).

By way of example and not limitation, the ninth frame may be a reassociation request (Reassociation Request) frame, and the tenth frame may be a reassociation response (Reassociation Response) frame.

Based on the foregoing solution, after the security association between the non-AP MLD and the second AP MLD is successfully established, the non-AP MLD can delete the security association between the non-AP MLD and the first AP MLD, thereby ensuring successful switching of the non-AP MLD between the AP MLDs.

With reference to the fifth aspect, in some implementations of the fifth aspect, the ninth frame is further used to request to transfer one or more contexts of the non-AP MLD to the second AP MLD, the ninth frame includes a first field and/or a second field, the first field indicates to transfer all or a part of the contexts of the non-AP MLD, and the second field indicates whether to perform data transmission of uplink data and/or downlink data.

For specific descriptions of the first field and the second field, refer to related content in the first aspect. This is not limited herein.

With reference to the fifth aspect, in some implementations of the fifth aspect, after sending the ninth frame, the non-AP MLD stops sending the uplink data to the first AP MLD.

With reference to the fifth aspect, in some implementations of the fifth aspect, the tenth frame further indicates whether one or more contexts of the non-AP MLD are successfully transferred. According to a sixth aspect, a communication method is provided. The method includes: A second access point multi-link device AP MLD receives a ninth frame, where the ninth frame is used to request to establish a security association between a non-AP MLD and the second AP MLD, and a first AP MLD is associated with the non-AP MLD; the second AP MLD establishes the security association with the non-AP MLD based on the ninth frame; and the second AP MLD sends a tenth frame to the non-AP MLD, where the tenth frame indicates that the security association between the non-AP MLD and the second AP MLD is successfully established.

It should be understood that the method according to the sixth aspect may be performed by the first AP MLD. In this application, the first AP MLD may be the first AP MLD itself, or may be a component (for example, a processor, a chip, or a chip system) in the first AP MLD, or may be a logical module or software for implementing all or a part of functions of the first AP MLD. This is not specifically limited herein in this application.

It should be understood that the security association between the non-AP MLD and the first AP MLD or the second AP MLD is not limited in this application. For example, the security association may be a pairwise transient key security association (pairwise transient key security association, PTKSA).

By way of example and not limitation, the ninth frame may be a reassociation request (Reassociation Request) frame, and the tenth frame may be a reassociation response (Reassociation Response) frame.

Based on the foregoing solution, after successfully creating the security association with the non-AP MLD, the second AP MLD can send the tenth frame to the non-AP MLD, so that the non-AP MLD can delete the security association between the non-AP MLD and the first AP MLD after determining that the security association between the non-AP MLD and the second AP MLD is successfully created, thereby ensuring successful switching of the non-AP MLD between the AP MLDs.

With reference to the sixth aspect, in some implementations of the sixth aspect, the ninth frame is further used to request to transfer one or more contexts of the non-AP MLD from the first AP MLD to the second AP MLD, the ninth frame includes a first field and/or a second field, the first field indicates to transfer all or a part of the contexts of the non-AP MLD, and the second field indicates whether to perform data transmission of uplink data and/or downlink data.

For specific descriptions of the first field and the second field, refer to related content in the first aspect. This is not limited herein.

With reference to the sixth aspect, in some implementations of the sixth aspect, the tenth frame further indicates whether the one or more contexts of the non-AP MLD are successfully transferred. According to a seventh aspect, a communication apparatus is provided, including a transceiver unit and a processing unit. The transceiver unit is configured to receive a first frame, where the first frame is used to request to transfer one or more contexts of a non-access point multi-link device non-AP MLD to a second AP MLD, and the non-AP MLD is associated with a first AP MLD. The processing unit is configured to transfer a data path of the non-AP MLD to the second AP MLD based on the first frame. After the data path of the non-AP MLD is transferred to the second AP MLD, the processing unit is further configured to transfer the one or more contexts of the non-AP MLD to the second AP MLD based on the first frame.

The transceiver unit may perform receiving and sending in the first aspect, and the processing unit may perform processing other than receiving and sending in the first aspect.

According to an eighth aspect, a communication apparatus is provided, including a transceiver unit and a processing unit. The transceiver unit is configured to receive a seventh frame from a non-access point multi-link device non-AP MLD, where the seventh frame is used to request to transfer one or more contexts of the non-AP MLD to a second AP MLD, and the non-AP MLD is associated with a first AP MLD. The processing unit is configured to send a first frame to the first AP MLD based on the first frame, where the first frame is used to request to transfer the one or more contexts of the non-AP MLD to the second AP MLD. The transceiver unit is further configured to receive a fourth frame after a data path of the non-AP MLD is transferred to the second AP MLD, where the fourth frame includes information about the one or more contexts of the non-AP MLD.

The transceiver unit may perform receiving and sending in the second aspect, and the processing unit may perform processing other than receiving and sending in the second aspect.

According to a ninth aspect, a communication apparatus is provided, including a transceiver unit and a processing unit. The transceiver unit is configured to receive a second frame from a first AP MLD, where the third frame is used to request to transfer a data path of a non-access point multi-link device non-AP MLD to a second AP MLD, and the non-AP MLD is associated with the first AP MLD. The processing unit is configured to transfer the data path of the non-AP MLD to the second AP MLD based on the third frame. The transceiver unit is further configured to receive a fourth frame after the data path of the non-AP MLD is transferred to the second AP MLD, where the fourth frame includes information about one or more contexts of the non-AP MLD.

The transceiver unit may perform receiving and sending in the third aspect, and the processing unit may perform processing other than receiving and sending in the third aspect.

According to a tenth aspect, a communication apparatus is provided, including a transceiver unit. The transceiver unit is configured to send a first frame, where the first frame is used to request to transfer one or more contexts of a non-access point multi-link device non-AP MLD to a second AP MLD. The transceiver unit is further configured to receive a fifth frame, where the fifth frame indicates that the one or more contexts of the non-AP MLD are successfully transferred.

With reference to the tenth aspect, in some implementations of the tenth aspect, the communication apparatus further includes a processing unit. The processing unit is configured to stop, after sending the first frame, sending uplink data to a distributed system.

The transceiver unit may perform receiving and sending in the fourth aspect, and the processing unit may perform processing other than receiving and sending in the fourth aspect.

According to an eleventh aspect, a communication apparatus is provided, including a transceiver unit and a processing unit. The transceiver unit is configured to send a ninth frame to a second access point multi-link device AP MLD, where the ninth frame is used to request to establish a security association between a non-AP MLD and the second AP MLD, and a first AP MLD is associated with the non-AP MLD. The transceiver unit is further configured to receive a tenth frame from the second AP MLD, where the tenth frame indicates that the security association between the non-AP MLD and the second AP MLD is successfully established. The processing unit is configured to delete a security association between the non-AP MLD and the first AP MLD based on the tenth frame.

The transceiver unit may perform receiving and sending in the fifth aspect, and the processing unit may perform processing other than receiving and sending in the fifth aspect.

According to a twelfth aspect, a communication apparatus is provided, including a transceiver unit and a processing unit. The transceiver unit is configured to receive a ninth frame, where the ninth frame is used to request to establish a security association between a non-AP MLD and a second AP MLD, and a first AP MLD is associated with the non-AP MLD. The processing unit is configured to establish the security association with the non-AP MLD based on the ninth frame. The transceiver unit is further configured to send a tenth frame to the non-AP MLD, where the tenth frame indicates that the security association between the non-AP MLD and the second AP MLD is successfully established.

The transceiver unit may perform receiving and sending in the sixth aspect, and the processing unit may perform processing other than receiving and sending in the sixth aspect.

According to a thirteenth aspect, a communication apparatus is provided. The communication apparatus includes a transceiver, a processor, and a memory. The processor is configured to control the transceiver to receive and send signals. The memory is configured to store a computer program. The processor is configured to: invoke the computer program from the memory and run the computer program, to enable the communication apparatus to perform the method according to any one of the possible implementations of the first aspect to the sixth aspect.

Optionally, there are one or more processors, and there are one or more memories.

Optionally, the memory may be integrated with the processor, or the memory and the processor are separately disposed.

Optionally, the communication apparatus further includes a transmitting apparatus (transmitting device) and a receiving apparatus (receiving device).

According to a fourteenth aspect, a communication system is provided. The communication system includes a first AP MLD, a second AP MLD, and a non-AP MLD. The first AP MLD is configured to perform the method according to any one of the first aspect or the possible implementations of the first aspect. The second AP MLD is configured to perform the method according to any one of the second aspect, the third aspect, and the sixth aspect, or the possible implementations of second aspect, the third aspect, and the sixth aspect. The non-AP MLD is configured to perform the method according to any one of the fourth aspect and the fifth aspect, or the possible implementations of the fourth aspect and the fifth aspect.

According to a fifteenth aspect, a communication system is provided. The communication system includes the first communication apparatus according to any one of the fifth aspect or the implementations of the fifth aspect, the second communication apparatus according to any one of the sixth aspect, the seventh aspect, and the ninth aspect, or the implementations of the sixth aspect, the seventh aspect, and the ninth aspect, and the third communication apparatus according to any one of the eighth aspect and the tenth aspect, or the implementations of the eighth aspect and the tenth aspect.

According to a sixteenth aspect, a computer program is provided. When the computer program is run, the method according to any one of the first aspect to the sixth aspect or the possible implementations of the first aspect to the sixth aspect is performed.

According to a seventeenth aspect, a computer-readable storage medium is provided. The computer-readable storage medium stores a computer program or code. When the computer program or the code is run, the method according to any one of the first aspect to the sixth aspect or the possible implementations of the first aspect to the sixth aspect is performed.

According to an eighteenth aspect, a chip is provided. The chip includes at least one processor. The at least one processor is coupled to a memory. The memory is configured to store a computer program. The processor is configured to: invoke the computer program from the memory and run the computer program, to enable a communication apparatus on which the chip system is installed to perform the method according to any one of the first aspect to the sixth aspect or the possible implementations of the first aspect to the sixth aspect.

The chip may include an input circuit or an interface configured to send information or data and an output circuit or an interface configured to receive information or data.

According to a nineteenth aspect, a computer program product is provided. The computer program product includes computer program code. When the computer program code is run, the method according to any one of the first aspect to the sixth aspect or the possible implementations of the first aspect to the sixth aspect is performed.

It may be understood that descriptions of supplements, explanations, and beneficial effects of the first aspect are also applicable to the second aspect to the nineteenth aspect. For brevity, details are not described again.

### BRIEF DESCRIPTION OF DRAWINGS

FIG. 1 is a diagram of a wireless communication system 100 applicable to an embodiment of this application;
FIG. 2 is a diagram of establishing a link between an AP MLD and a non-AP MLD;
FIG. 3A and FIG. 3B are diagrams of communication between an MLD and another device through a plurality of links in a wireless local area network;
FIG. 4 is a diagram of an address of an MLD;
FIG. 5 is a diagram of a BA session establishment procedure;
FIG. 6 is a diagram of a frame structure of an ADDBA request/response frame;
FIG. 7 is a schematic flowchart of context transfer;
FIG. 8 is a diagram of a communication method 200 according to an embodiment of this application;
FIG. 9 is a diagram of a frame structure of a request frame #1 according to an embodiment of this application;
FIG. 10 is a diagram of a communication method 300 according to an embodiment of this application;
FIG. 11 is a diagram of a communication method 400 according to an embodiment of this application;
FIG. 12 is a diagram of a frame structure of a request frame #9 according to an embodiment of this application;
FIG. 13 is a block diagram of an apparatus 1000 according to an embodiment of this application; and
FIG. 14 is a block diagram of an apparatus 2000 according to an embodiment of this application.

### DESCRIPTION OF EMBODIMENTS

With reference to accompanying drawings, the following describes technical solutions in this application.

The technical solutions provided in embodiments of this application may be applied to a WLAN system, for example, a Wi-Fi system. For example, a method provided in embodiments of this application is applicable to the IEEE 802.11 series protocols such as the 802.11be protocol, a next-generation protocol, and a subsequent evolved protocol. The protocols are not exhaustively enumerated. The technical solutions provided in embodiments of this application may be further applied to a UWB technology-based wireless personal area network (wireless personal area network, WPAN). For example, the method provided in embodiments of this application is applicable to the IEEE 802.15 series protocols such as the 802.15.4a protocol, the 802.15.4z protocol, or the 802.15.4ab protocol, or a future specific-generation UWB WPAN protocol. The protocols are not exhaustively enumerated. The technical solutions provided in embodiments of this application may be further applied to the following communication systems such as an internet of things (internet of things, IoT) system, vehicle-to-everything (vehicle-to-X, V2X), and a narrowband internet of things (narrowband internet of things, NB-IoT) system, and applied to a device in the vehicle-to-everything, an internet of things node, a sensor, or the like in an internet of things (IoT, internet of things), a smart camera, a smart remote control, or a smart water or electricity meter in a smart home, a sensor in a smart city, or the like.

The WLAN system can provide high-rate and low-latency transmission. With continuous evolution of WLAN application scenarios, the WLAN system is to be used in more scenarios or industries, for example, used in the internet of things industry, used in the vehicle-to-everything industry, or used in the banking industry, and used in enterprise offices, stadiums, exhibition halls, concert halls, hotel rooms, dormitories, wards, classrooms, supermarkets, squares, streets, production workshops, and warehousing. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an augmented reality (augmented reality, AR) wearable device or a virtual reality (virtual reality, VR) wearable device), a smart device (for example, a printer, a projector, a loudspeaker, or a speaker) in a smart office, a vehicle-to-everything device in vehicle-to-everything, infrastructure (for example, a vending machine, a self-service navigation console in a supermarket, a self-service cash register, or a self-service ordering machine) in a daily life scenario, a device in a large stadium or music venue, or the like. For example, the access point and the station each may be a device used in vehicle-to-everything, an internet of things node or a sensor in an internet of things, a smart camera, a smart remote control, or a smart water or electricity meter in a smart home, or a sensor in a smart city.

A WLAN, especially a network compliant with the IEEE 802.11 series standards, for example, a system supporting Wi-Fi 7 that may also be referred to as extremely high throughput (extremely high throughput, EHT), or for another example, a system supporting Wi-Fi 8 that may also be referred to as ultra high reliability (ultra high reliability, UHR) or ultra high reliability and throughput (ultra high reliability and throughput, UHRT), is mainly used as an example in embodiments of this application. However, a person skilled in the art easily understands that aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standards, and mainly used in Europe), and a wide area network (WAN) or another network known currently or developed in future.

The foregoing communication systems applicable to this application are merely examples for description, and a communication system applicable to this application is not limited thereto. This applies throughout and is not repeated below.

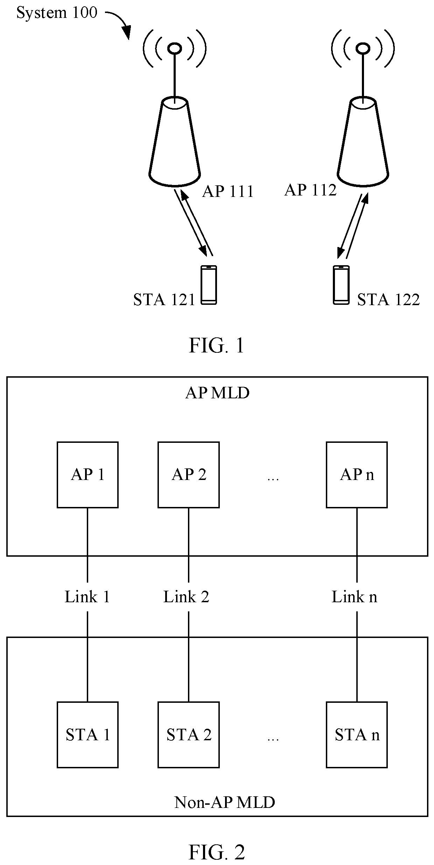

For ease of understanding embodiments of this application, the communication system applicable to embodiments of this application is first described in detail with reference to FIG. 1.

FIG. 1 is a diagram of a wireless communication system 100 applicable to an embodiment of this application. As shown in FIG. 1, the technical solutions in embodiments of this application may be applied to a wireless local area network. The wireless communication system 100 may include an access point AP 111 and an AP 112. The wireless communication system 100 may further include a station (station, STA) 121 and a STA 122. For example, the AP may be a multi-link AP, or the STA may be a multi-link STA.

One or more STAs in a station device may establish an association relationship with and then communicate with one or more APs in an access point device. For example, the AP 111 may communicate with the STA 121. For example, the AP 111 establishes an association relationship with and then communicates with the STA 121. The AP 112 may communicate with the STA 122. For example, the AP 112 establishes an association relationship with and then communicates with the STA 122.

It should be understood that the foregoing communication system that is applicable to this application and described with reference to FIG. 1 is merely an example for description, and the communication system applicable to this application is not limited thereto. For example, the communication system may include more APs. For another example, the communication system may further include more STAs. For another example, this embodiment of this application may be applied to a multi-device coordination scenario, for example, a multi-AP (multi-access point, Multi-AP) coordination scenario or a multi-station coordination scenario.

The AP is also referred to as a wireless access point, a hotspot, or the like. The AP is an access point for a mobile user to access a wired network, and is mainly deployed in a home, a building, or a campus, or may be deployed outdoors. The AP is equivalent to a bridge that is connected to the wired network and a wireless network. A main function of the AP is to connect wireless network clients together, and then connect the wireless network to an ethernet. Specifically, the AP may be a terminal device or a network device with a wireless fidelity (wireless fidelity, Wi-Fi) chip. Optionally, the AP may be a device that supports a plurality of WLAN standards such as 802.11. The AP device in this embodiment of this application may be a device in the wireless network. The AP device may be a communication entity like a communication server, a router, a switch, or a bridge, or the AP device may include a macro base station, a micro base station, a relay station, and the like in various forms. Certainly, the AP may alternatively be a chip, a circuit, or a processing system in the device in the various forms, to implement the method and functions in embodiments of this application. The AP device may be used in a plurality of scenarios, for example, may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in an internet of things, an entertainment terminal (for example, an AR wearable device or a VR wearable device), a smart device (for example, a printer or a projector) in a smart office, a vehicle-to-everything device in vehicle-to-everything, and some infrastructure (such as a vending machine, a self-service navigation console in a supermarket, a self-service cash register, and a self-service ordering machine) in a daily life scenario.

The STA device in this embodiment of this application may be a device having a wireless transceiver function, for example, may be a device that supports the 802.11 series protocols and may communicate with the AP or another STA. For example, the STA is any user communication device that allows a user to communicate with the AP and then communicate with the WLAN. The STA device is, for example, user equipment (user equipment, UE), a mobile station (mobile station, MS), a mobile terminal (mobile terminal, MT), an access terminal, a subscriber unit, a subscriber station, a mobile station, a remote station, a remote terminal, a mobile device, a user terminal, a terminal, a wireless communication device, a user agent, or a user apparatus.

The STA in this embodiment of this application may alternatively be a device that provides a user with voice/data connectivity, for example, a handheld device or a vehicle-mounted device having a wireless connection function. For example, the STA is a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a vehicle-mounted device, a wearable device, a terminal device in a 5G network, or a terminal device in a future evolved public land mobile network (public land mobile network, PLMN). This is not limited in embodiments of this application.

By way of example and not limitation, in this embodiment of this application, the STA device may alternatively be a wearable device. The wearable device may also be referred to as a wearable smart device, and is a general term of wearable devices such as glasses, gloves, watches, clothes, and shoes, that are developed by applying wearable technologies to smart designs of daily wear. For example, the wearable smart device includes a smartwatch or smart glasses, and devices that focus on only one type of application function and need to cooperate with another device like a smartphone for use, such as various smart bands and smart jewelry for monitoring physical signs. In addition, in this embodiment of this application, the STA device may alternatively be a terminal device in an internet of things (Internet of Things, IoT) system. An IoT is an important part in future development of information technologies, and a main technical feature of the IoT is to connect a thing to a network by using a communication technology, to implement an intelligent network for human-machine interconnection and thing-thing interconnection. In this embodiment of this application, an IoT technology may implement massive connections, deep coverage, and terminal power save by using, for example, a narrowband (narrowband, NB) technology.

In addition, in this embodiment of this application, the STA device may be a device in a vehicle-to-everything system. Communication modes in the vehicle-to-everything system are collectively referred to as V2X (X indicates everything). For example, the V2X communication includes vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, or vehicle-to-network (vehicle-to-network, V2N) communication.

In addition, in this embodiment of this application, the STA device may further include a sensor in a smart printer, a train detector, a gas station, or the link. Main functions of the STA device include collecting data (by a part of terminal devices), receiving control information and downlink data of the AP device, sending an electromagnetic wave, and transmitting data to the AP device.

In this embodiment of this application, wireless communication may be performed between the AP and the STA using various standards. For example, an uplink transmission mode between the AP and the STA includes but is not limited to an orthogonal frequency-division multiple access (orthogonal frequency-division multiple access, OFDMA) mode, a multi-user multiple-input multiple-output (multi-user multiple-input multiple-output, MU-MIMO) mode, an OFDMA and MU-MIMO hybrid transmission mode, or a single-user multiple-input multiple-output (single-user multiple-input multiple-output, SU-MIMO) technology.

It should be understood that specific forms of the STA device and the AP device are not specially limited in embodiments of this application, and are merely examples for description herein.

A specific structure of an execution body of the method provided in embodiments of this application is not specially limited in embodiments of this application provided that a program that records code for the method provided in embodiments of this application can be run, to perform communication according to the method provided in embodiments of this application. For example, the execution body of the method provided in embodiments of this application may be a device (for example, the AP device or the STA device) or a functional module in the device (for example, the AP device or the STA device) that can invoke and execute the program.

For ease of understanding embodiments of this application, several basic concepts in embodiments of this application are briefly described. It should be understood that the basic concepts described below are briefly described by using basic concepts specified in a WLAN protocol as examples, but embodiments of this application are not limited to being applied only to a WLAN system. Therefore, standard names appearing when the WLAN system is used as an example for description are all functional descriptions, and specific names are not limited, indicate only functions of a device, and may be correspondingly extended to another system, for example, an NR system or a future communication system.

### 1. Multiple links

Due to an increasingly high user requirement on communication quality of service, it is already difficult for the IEEE 802.11ax standard to meet user requirements in terms of a high throughput, a low jitter, a low delay, and the like. Therefore, a next-generation IEEE technology, for example, the IEEE 802.11be standard, urgently needs to be developed.

A device in the IEEE 802.11be standard needs to be backward compatible, that is, compatible with the IEEE 802.11ax standard and an earlier standard. Therefore, a device in an IEEE 802.11 next-generation standard also supports an operating frequency band of a device in IEEE 802.11ax. For example, the device in the IEEE 802.11 next-generation standard supports frequency bands such as 2.4 GHz, 5 GHz, and 6 GHz.

Specifically, channel division may be performed based on a latest open free 6 GHz frequency band, so that a supported bandwidth may exceed a maximum bandwidth 160 MHz (for example, 320 MHz) supported in 5 GHz. On a same frequency band, a peak throughput may be improved and a traffic transmission delay may be reduced in a manner like cooperation of multiple channels. In addition to an ultra-large bandwidth, a device in an IEEE 802.11ax next-generation standard may further improve the peak throughput in a manner like cooperation of multiple frequency bands (2.4 GHz, 5 GHz, and 6 GHz). In this application, the multiple frequency bands or the multiple channels are collectively referred to as the multiple links.

### 2. Multi-link device (multi-link device, MLD)

The multi-link device (multi-link device, MLD) means that the device simultaneously has a plurality of stations (for example, APs or non-AP STAs) that respectively operate on different frequency bands or channels. When a spacing between channels on which two stations in one multi-link device operate is large enough, the two stations may operate independently without interfering with each other. If in any two stations, one station supports sending when the other station supports receiving, the two stations may be considered to support a simultaneous transmitting and receiving (simultaneous transmitting and receiving, STR) capability. Otherwise, the two stations are considered to have a non-simultaneous transmitting and receiving (non-simultaneous transmitting and receiving, NSTR) capability. The multi-link device includes a plurality of affiliated stations. The affiliated station may be a physical station, or may be a logical station. Each station may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device). Alternatively, the multi-link device whose affiliated station is a non-AP STA is referred to as a multi-link non-AP, a multi-link non-AP device, or a non-AP multi-link device (non-AP multi-link device, non-AP MLD).

FIG. 2 is a diagram of establishing a link between an AP MLD and a non-AP MLD. As shown in FIG. 2, the AP MLD includes an AP 1, an AP 2, ..., and an AP n, and the non-AP MLD includes a STA 1, a STA 2, ..., and a STA n. Herein, n is a positive integer. The AP MLD may concurrently communicate with the non-AP MLD through a link 1, a link 2, ..., and a link n. The STA 1 in the non-AP MLD establishes an association relationship with the AP 1 in the AP MLD. The STA 2 in the non-AP MLD establishes an association relationship with the AP 2 in the AP MLD. The STA n in the non-AP MLD establishes an association relationship with the AP n in the AP MLD. In this way, one or more STAs in the non-AP MLD establish an association relationship with and then communicate with one or more APs in the AP MLD. Frequency bands on which multi-link devices (including the AP MLD and the non-AP MLD) operate may include but are not limited to sub-1 GHz, 2.4 GHz, 5 GHz, 6 GHz, high-frequency 60 GHz, and the like.

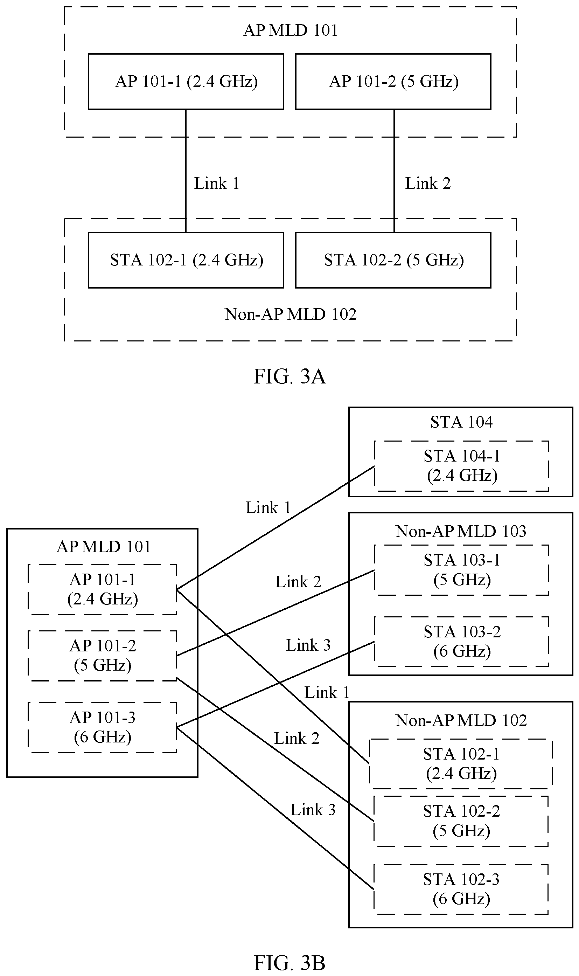

The frequency bands on which the multi-link devices operate may include but are not limited to sub-1 GHz, 2.4 GHz, 5 GHz, 6 GHz, a high-frequency 60 GHz, and the like. FIG. 3A and FIG. 3B are two diagrams of communication between the multi-link device and another device through a plurality of links in a wireless local area network.

FIG. 3A shows a scenario in which an AP MLD 101 communicates with a non-AP MLD 102. The AP MLD 101 includes an affiliated AP 101-1 and AP 101-2. The non-AP MLD 102 includes an affiliated STA 102-1 and STA 102-2. The AP MLD 101 concurrently communicates with the non-AP MLD 102 through a link 1 and a link 2.

For example, FIG. 3B shows a scenario in which an AP MLD 101 communicates with a non-AP MLD 102, a non-AP MLD 103, and a STA 104. The AP MLD 101 includes an affiliated AP 101-1 to an affiliated AP 101-3. The non-AP MLD 102 includes three affiliated stations: a STA 102-1, a STA 102-2, and a STA 102-3. The non-AP MLD 103 includes two affiliated stations: a STA 103-1 and a STA 103-2. The STA 104 is a single-link device and includes a STA 104-1. The AP MLD 101 may separately communicate with the non-AP MLD 102 through a link 1, a link 2, and a link 3, communicate with the non-AP MLD 103 through a link 2 and a link 3, and communicate with the STA 104 through a link 1. In an example, the STA 104 operates on the 2.4 GHz frequency band; in the non-AP MLD 103, the STA 103-1 operates on the 5 GHz frequency band, and the STA 103-2 operates on the 6 GHz frequency band; and in the non-AP MLD 102, the STA 102-1 operates on the 2.4 GHz frequency band, the STA 102-2 operates on the 5 GHz frequency band, and the STA 102-3 operates on the 6 GHz frequency band. The AP 101-1 operating on the 2.4 GHz frequency band in the AP MLD 101 may communicate uplink or downlink data with the STA 104 and the STA 102-1 in the non-AP MLD 102 through the link 1. The AP 101-2 operating on the 5 GHz frequency band in the AP MLD 101 may communicate, through the link 2, uplink or downlink data with the STA 103-1 operating on the 5 GHz frequency band in the non-AP MLD 103, and may also communicate, through the link 2, uplink or downlink data with the STA 102-2 operating on the 5 GHz frequency band in the non-AP MLD 102. The AP 101-3 operating on the 6 GHz frequency band in the AP MLD 101 may communicate, through the link 3, uplink or downlink data with the STA 102-3 operating on the 6 GHz frequency band in the non-AP MLD 102, and may also communicate uplink or downlink data with the STA 103-2 in the non-AP MLD through the link 3.

FIG. 3A shows only that the AP MLD supports two frequency bands. FIG. 3B illustrates only that the AP MLD 101 supports three frequency bands (2.4 GHz, 5 GHz, and 6 GHz), each frequency band corresponds to one link, and the AP MLD 101 may operate on one or more links in the link 1, the link 2, and the link 3. On an AP side or a STA side, the link may also be understood as a station operating on the link. During actual application, the AP MLD and the non-AP MLD may further support more or fewer frequency bands, that is, the AP MLD and the non-AP MLD may operate on more links or fewer links. This is not limited in embodiments of this application. FIG. 3A and FIG. 3B are merely simple diagrams, and do not constitute any limitation on the protection scope of embodiments of this application.

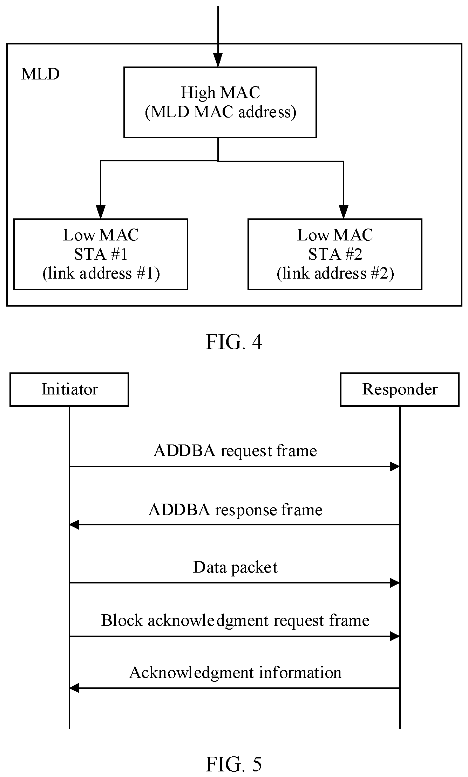

For the multi-link device, each multi-link device has a respective medium access control address (medium access control address, MAC address) on each link, and the multi-link device further has an MLD MAC address (MLD MAC address). For ease of understanding, the following briefly describes a structure of the MLD with reference to FIG. 4. In FIG. 4, an example in which the MLD is a station multi-link device (station MLD, STA MLD) and includes two STAs is used for description. FIG. 4 is a diagram of an address of the MLD.

For example, the multi-link device in embodiments of this application may be a single-antenna device, or may be a multi-antenna device, for example, may be a device with more than two antennas. A quantity of antennas included in the multi-link device is not limited in embodiments of this application.

### 3. Distributed system (Distributed system, DS)

The distributed system is a system used to interconnect a plurality of basic service sets (basic service sets, BSSs) and integrated local area networks to create an extended service set (extended service set, ESS). The DS system delivers downlink data of a STA (or a non-AP MLD) to a corresponding associated AP (or AP MLD). Similarly, the AP delivers uplink data of the STA (or the non-AP MLD) to a network through the DS for transmission.

The AP may use a DS-STA-NOTIFY.request primitive to update STA-to-AP mapping information in the DS. Specifically, there are three update types: add (ADD), move (MOVE), and delete (DELETE).

### 4. Block acknowledgment (Block ACK, BA) session establishment

In a multi-link scenario, a block acknowledgment session needs to be established before multi-link aggregation transmission is performed. A block acknowledgment session established between two stations has a specific traffic identifier (Traffic Identifier, TID), and is used only for unidirectional data transmission from an initiator to a responder. For example, for downlink data transmission, only an AP can initiate BA session establishment. For uplink data transmission, only a STA can initiate BA session establishment.

FIG. 5 is a diagram of a BA session establishment procedure. As shown in FIG. 5, the initiator exchanges an ADDBA request/response frame with the responder, to establish a BA session for a TID.

In a possible implementation, the initiator or the responder may send a DELBA to terminate the block acknowledgment session for the corresponding TID (not shown in the figure).

For example, a block acknowledgment session of a transmitter includes parameters such as a TID traffic identifier, a sequence number (sequence number, SN) allocated to each MAC service data unit (MAC Service Data Unit, MSDU), a block acknowledgment policy, whether MSDU aggregation is allowed, whether fragmentation is allowed, whether an HE fragmentation operation is supported, WinStart_O (a window start location) and WinSize_O (a window size) of a transmit buffer, a status indicating whether each MPDU in a window is successfully sent, and a quantity of retransmissions of the MPDU.

For example, a block acknowledgment session of a receiver includes parameters such as a TID traffic identifier, a block acknowledgment policy, whether MSDU aggregation is allowed, whether fragmentation is allowed, whether an HE fragmentation operation is supported, a receiver scoreboard bitmap, WinStart_R (a window start location) and WinSize_R (a window size), WinStart_B (a window start location) and WinSize_B (a window size) of a receive reordering buffer, and a replay counter. The scoreboard bitmap is used to record which MSDUs are successfully received, and the receive reordering buffer is used to buffer the received MSDUs, because a MAC layer needs to deliver the received MSDUs to an LLC layer in order. It may be understood that, if a packet fails to be received, another MSDU following the MSDU cannot be delivered to the LLC layer even if the another MSDU is successfully received.

It should be understood that, either a transmitter or a receiver of a TID may send a DELBA frame to delete a block session.

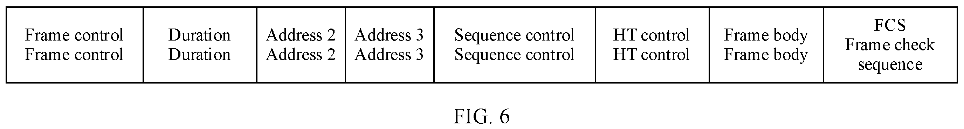

FIG. 6 is a diagram of a frame structure of the ADDBA request/response frame. As shown in FIG. 6, the frame structure includes the following fields:
a frame control field, a duration field, an address 2 field, an address 3 field, a sequence control field, an HT control field, a frame body field, and a frame check sequence field. The address 2 indicates a transmitter address (transmitter address, TA). The address 3 indicates an address of an AP MLD associated with the receiver, or an address of an AP (which is an AP in the AP MLD) associated with the receiver.

For the ADDBA request frame, the frame body may include the following fields: a category (Category) field, a block acknowledgment action (Block ACK Action) field, a dialog token (Dialog Token) field, a block acknowledgment parameter set (Block Ack Parameter Set) field, a block acknowledgment timeout value (Block Ack Timeout Value) field, a block acknowledgment starting sequence control (Block Ack Starting Sequence Control) field, an add block acknowledgment extension (ADDBA Extension (optional)) field, and the like.

For the ADDBA response frame, the frame body may include the following fields: the category field, the block acknowledgment action field, the dialog token field, a status code (Status Code) field, the block acknowledgment parameter set field, the block acknowledgment timeout value field, the add block acknowledgment extension field, and the like.

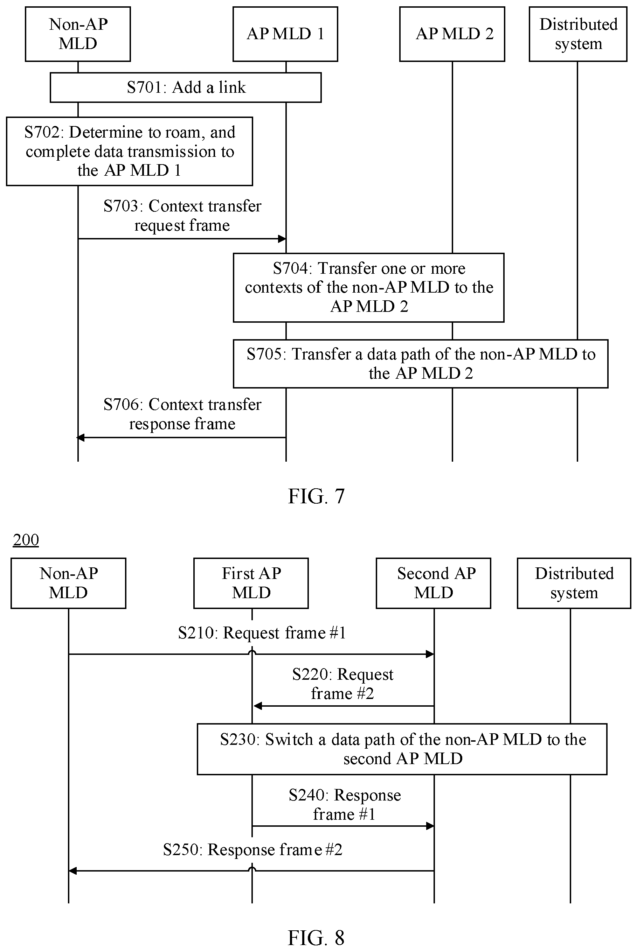

FIG. 7 is a schematic flowchart of context (context) transfer. As shown in FIG. 7, the following steps are included.

S701: A non-AP MLD requests to establish one or more links with an AP MLD 2.

S702: The non-AP MLD determines to perform roaming and stops sending uplink data to an AP MLD 1.

S703: The non-AP MLD sends a context transfer request frame to the AP MLD 1, to request to transfer one or more contexts of the non-AP MLD to the AP MLD 1.

S704: The AP MLD 1 transfers, to the AP MLD 2, the one or more contexts that the non-AP MLD requests to transfer.

S705: The AP MLD 1 interacts with a distributed system (Distributed system, DS), to transfer a data path of the non-AP MLD to the AP MLD 2.

S706: The AP MLD 1 sends a context transfer response frame to the non-AP MLD, to notify that the one or more contexts of the non-AP MLD are successfully transferred.

It can be found that, in the procedure shown in FIG. 7, the AP MLD 1 interacts with the DS to transfer the data path of the non-AP MLD to the AP MLD 2 only after the AP MLD 1 completes transfer of the one or more contexts of the non-AP MLD. However, in the context transfer process, because the data path of the non-AP MLD is still on the AP MLD 1, the DS still transmits downlink data of the non-AP MLD to the AP MLD 1. As a result, a data amount during data transmission that needs to be subsequently performed by the AP MLD is large, which increases transmission overheads. Data transmission means that to-be-sent data is forwarded from the AP MLD 1 to the AP MLD 2 or another hot-standby AP MLD, and/or that the AP MLD 1 forwards received but discontinuous data packets to the AP MLD 2 or the another hot-standby AP MLD. The data transmission may also be equivalently replaced with data forwarding (data forwarding). This is not limited in embodiments of this application.

In view of this, embodiments of this application provide a communication method and a communication apparatus, so that a data path of a non-AP MLD can be switched to a target AP MLD before a context is transferred, to reduce a data amount during data transmission, thereby reducing transmission overheads.

For ease of understanding embodiments of this application, the following several descriptions are provided.

First, in this application, unless otherwise specified or there is a logic conflict, terms and/or descriptions between different embodiments are consistent and may be mutually referenced, and technical features in different embodiments may be combined based on an internal logical relationship thereof, to form a new embodiment.

Second, in this application, "at least one" means one or more, and "a plurality of" means two or more. The term "and/or" describes an association relationship between associated objects, and indicates that three relationships may exist. For example, A and/or B may indicate the following cases: Only A exists, both A and B exist, and only B exists, where A and B may be singular or plural. In text descriptions of this application, the character "/" generally indicates an "or" relationship between associated objects. "At least one of the following items (pieces)" or a similar expression thereof means any combination of these items, including a single item (piece) or any combination of a plurality of items (pieces). For example, at least one of a, b, and c may indicate a, b, c, a and b, a and c, b and c, or a, b, and c, where a, b, and c each may be singular or plural. Third, in this application, "first", "second", and various numbers (for example, #1 and #2) indicate differentiation for ease of description, but are not intended to limit the scope of embodiments of this application, for example, are intended to differentiate different messages, but are not intended to describe a specific order or sequence. It may be understood that objects described in such a way are interchangeable in an appropriate circumstance, so that a solution other than embodiments of this application can be described.

Fourth, in this application, the terms "include" and "have" and any variants thereof are intended to cover a non-exclusive inclusion. For example, a process, method, system, product, or device that includes a series of steps or units is not necessarily limited to those steps or units that are clearly listed, but may include another step or unit that is not clearly listed or is inherent to the process, method, product, or device.

Fifth, in this application, "indicate" may include "directly indicate" and "indirectly indicate". When a piece of indication information is described as indicating A, the indication information may directly indicate A or indirectly indicate A, but it does not indicate that the indication information definitely carries A.

Indication manners in embodiments of this application may be understood as covering various methods that can enable a to-be-indicated party to learn of to-be-indicated information. The to-be-indicated information may be sent as a whole, or may be divided into a plurality of pieces of sub-information for separate sending. In addition, sending periods and/or sending occasions of the sub-information may be the same or different. A specific sending method is not limited in this application.

The "indication information" in embodiments of this application may be an explicit indication, to be specific, a direct indication using signaling, or an indication obtained based on a parameter indicated by signaling in combination with another rule or another parameter or obtained through deduction; or may be an implicit indication, to be specific, an indication obtained based on a rule, a relationship, or another parameter or obtained through deduction. This is not specifically limited in this application.

Sixth, in this application, a "protocol" may be a standard protocol in the communication field, for example, may include a 5G protocol, an NR protocol, and a related protocol applied to a future communication system. This is not limited in this application. "Predefinition" may include advance definition, for example, definition in a protocol. "Preconfiguration" may be implemented by prestoring corresponding code or a corresponding table on a device, or may be implemented in another manner that may indicate related information. A specific implementation thereof is not limited in this application.

Seventh, in this application, "storage" may mean storage in one or more memories. The one or more memories may be separately disposed, or may be integrated into an encoder, a decoder, a processor, or a communication apparatus. Alternatively, a part of the one or more memories may be separately disposed, and a part of the one or more memories may be integrated into the decoder, the processor, or the communication apparatus. A type of the memory may be a storage medium in any form. This is not limited in this application.

Eighth, in this application, if there is no logic conflict, "report", "feed back", and "send" are interchangeable.

FIG. 8 is a diagram of a communication method 200 according to an embodiment of this application. As shown in FIG. 8, the method 200 includes the following steps.

S210: A non-AP MLD sends a request frame #1 to a second AP MLD, and correspondingly, the second AP MLD receives the request frame #1. The request frame #1 is used to request to transfer one or more contexts of the non-AP MLD to the second AP MLD.

It should be understood that the request frame #1 may be an example of a seventh frame, and a specific name of the request frame #1 is not limited in embodiments of this application. For example, the request frame #1 may be a seamless roaming request (Seamless Roaming Request) frame.

Optionally, after sending the request frame #1, the non-AP MLD may stop sending (or delivering) uplink data to a distributed system, thereby reducing a data amount during data transmission that needs to be subsequently performed by a first AP MLD.

It should be understood that the one or more contexts of the non-AP MLD may include a block acknowledgment session context and/or a security association context. This is not limited in embodiments of this application.

It should be understood that specific information carried in the request frame #1 is not limited in embodiments of this application.

In a possible implementation, the request frame #1 includes a fifth field, and the fifth field may be an MLD MAC address field. Specifically, when the request frame #1 is sent to the second AP MLD, the MLD MAC address field is set to a MAC address of the first AP MLD.

In another possible implementation, the request frame #1 may include a first field, and the first field may be a non-default transfer (non-default transfer) field. Specifically, the non-default transfer field being set to 0 may indicate to transfer all of the contexts between the non-AP MLD and the first AP MLD. The non-default transfer field being set to 1 may indicate to transfer a part of the contexts between the non-AP MLD and the first AP MLD.

It may be understood that, when the non-default transfer field indicates to transfer the part of the contexts between the non-AP MLD and the first AP MLD, the request frame #1 may further indicate a context of a specific TID by using a fourth field. The fourth field includes a plurality of bits, and each bit corresponds to one traffic type. In other words, each bit in the fourth field may indicate whether a context of the corresponding traffic type needs to be transferred.

By way of example and not limitation, the fourth field may include a downlink (Downlink, DL) TID bitmap field indicating that a context of one or more downlink TIDs needs to be transferred. By way of example and not limitation, the fourth field may further carry an uplink (Uplink, UL) TID bitmap field indicating that a context of one or more uplink TIDs needs to be transferred.

In still another possible implementation, the request frame #1 may include a second field, and the second field indicates whether to perform data transmission. Specifically, the second field being set to 1 may indicate to perform data transmission, and the second field being set to 0 may indicate not to perform data transmission.

It should be understood that the data transmission may be understood as data transmission of the uplink data and/or data transmission of downlink data. In other words, the second field may indicate whether to perform data transmission of the downlink data, or the second field may indicate whether to perform data transmission of the uplink data, or the second field may indicate whether to perform data transmission of the uplink data and data transmission of the downlink data. The downlink data may be understood as data in a transmit buffer of the first AP MLD, and the uplink data may be understood as data in a reordering buffer of the first AP MLD.

It should be understood that, when the second field indicates only whether to perform data transmission of the uplink data or the downlink data, the request frame #1 may further carry an additional field #1 indicating whether to perform data transmission of another type of data. For example, when the second field indicates whether to perform data transmission of the downlink data, the request frame #1 may further include the field #1 to indicate whether to perform data transmission of the uplink data.

It should be noted that, when performing data transmission of the downlink data and/or data transmission of the uplink data, the first AP MLD needs to include, in a data frame, a sequence number and an end marker (End Marker) that correspond to each MSDU. The end marker may indicate that data transmission of the downlink data ends, and/or that data transmission of the uplink data ends.

In still another possible implementation, the request frame #1 may further include a third field, and the third field indicates whether to transfer a security association between the non-AP MLD and the first AP MLD. For example, the third field may indicate whether to perform a pairwise transient key security association (pairwise transient key security association, PTKSA). Specifically, when the third field is set to 1, the third field may indicate that the PTKSA context needs to be transferred to the second AP MLD. When the third field is set to 0, the third field may indicate not to transfer the PTKSA context to the second AP MLD.

It should be understood that specific content of the PTKSA context is not limited in embodiments of this application. For example, the PTKSA context may include a parameter like a PTK, a packet number counter (Packet Number Counter, PN Counter), or a replay counter (Replay Counter).

It may be understood that, when the third field indicates to transfer the security association, the one or more contexts of the non-AP MLD include at least the security association context.

In this embodiment of this application, the third bit is always set to 0, that is, indicates not to transfer the security association context. In an architecture of a non-co-located (non-co-located) AP MLD or a seamless mobility domain (Seamless Mobility Domain), the third bit may be set to 1, that is, indicate to transfer the security association context.

In still another possible implementation, the request frame #1 may further carry a seventh field, and the seventh field indicates to switch a link between the non-AP MLD and the second AP MLD from a power save (Power Save, PS) mode to an active (active) mode.

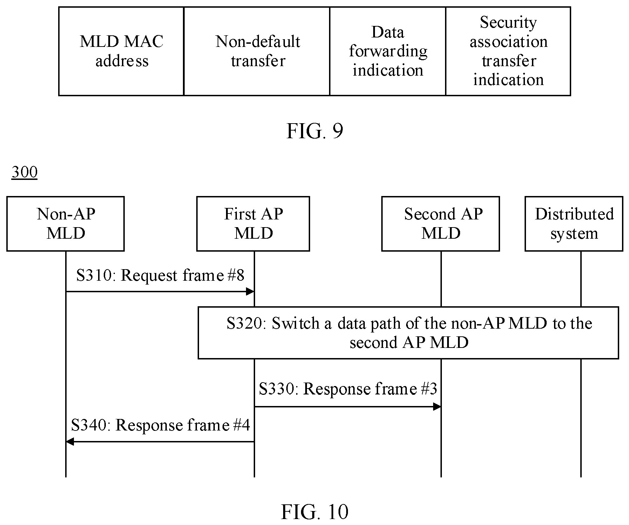

FIG. 9 is a diagram of a frame structure of the request frame #1 according to an embodiment of this application. As shown in FIG. 9, the request frame #1 includes the MLD MAC address field, the non-default transfer field, a data transmission indication field, and a security association transfer field. It should be noted that the frame structure shown in FIG. 9 is merely an example. A quantity of fields included in the request frame #1 and an order and lengths of the fields are not limited in embodiments of this application.

In a possible implementation, the request frame #1 may further carry a field #2, and the field #2 indicates that the first AP MLD or the second AP MLD is expected to reply with a response frame of the request frame #1.

In a possible implementation, the request frame #1 may further carry a field #3, and the field #3 indicates whether to remove a link between the non-AP MLD and the first AP MLD. For example, the field #3 may indicate, by using 1 bit, whether to remove all links between the non-AP MLD and the first AP MLD.

In a possible implementation, the request frame #1 needs to be encrypted or protected, to improve security of the communication method 200. An encryption manner or a protection manner of the request frame #1 is not limited in embodiments of this application.

It should be understood that the non-AP MLD may send the request frame #1 through any link between the non-AP MLD and the second AP MLD. This is not limited in embodiments of this application.

In this embodiment of this application, the request frame #1 may be used to activate a hot-standby (hot-standby) association of the second AP MLD, and after receiving the request frame #1, the second AP MLD can initiate transfer of the one or more contexts of the non-AP MLD based on the information carried in the request frame #1.

S220: The second AP MLD sends a request frame #2 to the first AP MLD, and correspondingly, the first AP MLD receives the request frame #2. The request frame #2 is used to request to transfer the one or more contexts of the non-AP MLD to the second AP MLD.

It should be understood that the request frame #2 may be an example of a first frame, and a specific name of the request frame #2 is not limited in embodiments of this application. For example, the request frame #2 may be a context transfer request (Context Transfer Request) frame.

It should be understood that specific information carried in the request frame #2 is not limited in embodiments of this application. For specific information carried in the request frame #2, refer to related descriptions in step S210. Details are not described herein again.

It should be noted that a fifth field carried in the request frame #2 is set to a MAC address of the non-AP MLD.

It should be understood that the first AP MLD may send the request frame #2 to the second AP MLD via the distributed system (distributed system, DS). Specifically, the distributed system includes an upper-layer access device and/or a network controller. To be specific, the first AP MLD may send the request frame #2 to the second AP MLD via the upper-layer access device, or the first AP MLD may send the request frame #2 to the second AP MLD via the network controller. This is not limited in embodiments of this application.

S230: Switch a data path of the non-AP MLD to the second AP MLD.

The following describes, in two manners, a specific manner of switching the data path of the non-AP MLD to the second AP MLD.

### Manner 1

The first AP MLD sends a request frame #3 to the distributed system, and correspondingly, the distributed system receives the request frame #3. The request frame #3 is used to transfer the data path of the non-AP MLD to the second AP MLD.

It should be understood that the request frame #2 may be an example of a second frame, and a specific name of the request frame #2 is not limited in embodiments of this application. By way of example and not limitation, the request frame #3 may be a DS-STA-Notify request primitive indicating move (MOVE), for the distributed system to transfer the data path of the non-AP MLD to the second AP MLD.

It should be understood that specific content carried in the request frame #3 is not limited in embodiments of this application. For example, the request frame #3 may include the MAC address of the non-AP MLD and a MAC address of the second AP MLD.

Correspondingly, after receiving the request frame #3, the distributed system transfers the data path of the non-AP MLD to the second AP MLD.

In a possible implementation, after step S230, the first AP MLD can further receive an acknowledgment ACK frame of the request frame #3.

### Manner 2

The second AP MLD sends a request frame #4 to the distributed system, and correspondingly, the distributed system receives the request frame #4. The request frame #4 is used to request to transfer the data path of the non-AP MLD to the second AP MLD.

It should be understood that the request frame #4 may be an example of a third frame. By way of example and not limitation, the request frame #4 may be a DS-STA-Notify request primitive indicating move (MOVE), for the distributed system to transfer the data path of the non-AP MLD to the second AP MLD.

It should be understood that a trigger condition for the second AP MLD to send the request frame #4 is not limited in embodiments of this application.

By way of example and not limitation, before the second AP MLD sends the request frame #4 to the distributed system, the first AP MLD sends a request frame #5 to the second AP MLD, and correspondingly, the second AP MLD receives the request frame #5. The request frame #5 is used to request to transfer the data path of the non-AP MLD to the second AP MLD, or the request frame #4 is used to request the second AP MLD to send the request frame #4 to the distributed system. The request frame #5 may be another example of the second frame.

By way of example and not limitation, the second AP MLD may automatically send the request frame #4 to the distributed system after a specific time period following execution of step S220. The specific time period may be preconfigured. This is not limited in embodiments of this application.

It should be understood that specific content carried in the request frame #4 is not limited in embodiments of this application. For example, the request frame #3 may include the MAC address of the non-AP MLD.

According to step S230, the first AP MLD can transfer the data path of the non-AP MLD to the second AP MLD before completing transfer of the one or more contexts of the non-AP MLD, thereby reducing the data amount during data transmission that needs to be performed by the first AP MLD.

Optionally, before step S230, the method 200 may further include the following step.

S225: After receiving the request frame #2, the first AP MLD stops sending the uplink data to the distributed system.

It may be understood that, in response to the request frame #2, the first AP MLD immediately stops sending the uplink data to the distributed system, to reduce the data amount during subsequent data transmission of the uplink data.

Further, after the data path of the non-AP MLD is transferred to the second AP MLD, the first AP MLD transfers the one or more contexts of the non-AP MLD to the second AP MLD according to the following steps.

S240: The first AP MLD sends a response frame #1 to the second AP MLD, and correspondingly, the second AP MLD receives the response frame #1. The response frame #1 includes information about the one or more contexts of the non-AP MLD.

It should be understood that the response frame #1 may be an example of a fourth frame, and a specific name of the response frame #1 is not limited in embodiments of this application. For example, the response frame #1 may be a context transfer response (Context Transfer Response) frame.

It should be understood that specific content of the information about the context carried in the response frame #1 is not limited in embodiments of this application.

By way of example and not limitation, context information of an uplink TID carried in the response frame #1 may include at least one of the following: the MAC address of the non-AP MLD, a DL TID traffic identifier, a block acknowledgment policy, whether MSDU aggregation is allowed, whether a fragmentation operation is allowed, whether an HE fragmentation operation is supported, WinStart_O (a window start location) and WinSize_O (a window size) of the transmit buffer, or a status indicating whether each MPDU in a window is successfully sent and a quantity of retransmissions of the MPDU.

By way of example and not limitation, context information of an uplink TID carried in the response frame #1 may include at least one of the following: the MAC address of the non-AP MLD, the UL TID traffic identifier, a block acknowledgment policy, whether MSDU aggregation is allowed, whether a fragmentation operation is allowed, whether an HE fragmentation operation is supported, a receiver scoreboard bitmap, WinStart_R (a window start location) and WinSize_R (a window size), WinStart_B (a window start location) and WinSize_B (a window size) of the receive reordering buffer, or a replay counter.

It should be understood that the response frame #1 may carry a status code to indicate whether the one or more contexts of the non-AP MLD are successfully transferred.

It should be understood that, after receiving the response frame #1, the second AP MLD may perform, based on the content carried in the response frame #1, data transmission of the uplink data and/or downlink data with the non-AP MLD by using the one or more contexts.

Optionally, after step S240, the first AP MLD can further receive an acknowledgment ACK frame of the response frame #1.

S250: The second AP MLD sends a response frame #2 to the non-AP MLD, and correspondingly, the non-AP MLD receives the response frame #2. The response frame #2 indicates that the one or more contexts of the non-AP MLD are successfully transferred.

It should be understood that the response frame #2 may be an example of a fifth frame, and a specific name of the response frame #2 is not limited in embodiments of this application. For example, the response frame #2 may be a seamless roaming response (Seamless Roaming Response) frame.

It should be understood that the response frame #2 may carry a status code to indicate whether the one or more contexts of the non-AP MLD are successfully transferred.

Optionally, when the request frame #1 in step S210 includes the foregoing field #2, and the field #2 indicates that the first AP MLD is expected to reply with the response frame of the request frame #1, step S250 may be replaced with the following step (not shown in the figure).

S250b: The first AP MLD sends a response frame #2 to the non-AP MLD, and correspondingly, the non-AP MLD receives the response frame #2.

It should be understood that, for specific descriptions of the response frame #2, refer to related content in S240. Details are not described herein again.

Based on the foregoing solution, in a roaming scenario, the non-AP MLD can send the request frame #1 to the second AP MLD, so that the second AP MLD initiates, to the first AP MLD, transfer of the one or more contexts between non-AP MLDs, and the first AP MLD can transfer the data path of the non-AP MLD to the second AP MLD before completing transfer of the one or more contexts between the non-AP MLDs, thereby reducing the data amount during data transmission that needs to be subsequently performed by the first AP MLD.

Optionally, after step S250 is completed, the method 200 may further include the following step (not shown in the figure).

S260: After the first AP MLD completes transmission of buffered data, remove all or a part of the links between the first AP MLD and the non-AP MLD.

In a possible implementation, after determining that the buffered data (or all data packets in a buffer) of the first AP MLD is (or are) transmitted, the non-AP MLD sends a request frame #6 to the first AP MLD. Correspondingly, the first AP MLD receives the request frame #6. The request frame #6 is used to remove all or the part of the links between the non-AP MLD and the first AP MLD.

It should be understood that the request frame #6 may be an example of a sixth frame, and a specific name of the request frame #6 is not limited in embodiments of this application.

It should be understood that a specific manner in which the non-AP MLD determines whether the buffered data of the first AP MLD is transmitted is not limited in embodiments of this application. For example, the first AP MLD may notify the non-AP MLD that the buffered data of the first AP MLD has been transmitted. Specifically, the first AP MLD may send a downlink buffer report (buffer report) frame to indicate that a downlink buffer is empty.

It should be understood that a specific manner in which the request frame #6 indicates to remove all or the part of the links between the non-AP MLD and the first AP MLD is not limited in embodiments of this application.

By way of example and not limitation, the request frame #6 may indicate, by using a 1-bit field #4, whether to remove all of the links between the non-AP MLD and the first AP MLD. Specifically, the field #4 being set to 0 indicates not to remove all of the links between the non-AP MLD and the first AP MLD; and the field #4 being set to 1 indicates to remove all of the links between the non-AP MLD and the first AP MLD.

By way of example and not limitation, the request frame #6 may indicate, by using a multi-bit field #4, whether to remove all or the part of the links between the non-AP MLD and the first AP MLD, and when the part of the links needs to be removed, the request frame #6 indicates that a specific link between the non-AP MLD and the first AP MLD needs to be removed.

It should be understood that the non-AP MLD may reuse an existing frame, for example, a link reconfiguration request/response (Link Reconfiguration Request/Response) frame, as the request frame #6, or the non-AP MLD may use an additionally designed frame as the request frame #6. This is not limited in embodiments of this application.

In another possible implementation, after the buffered data is transmitted, the first AP MLD sends a request frame #7 to the non-AP MLD. Correspondingly, the non-AP MLD receives the request frame #7. The request frame #7 is used to request to remove all or a part of the links between the non-AP MLD and the first AP MLD.

It should be understood that a specific manner in which the request frame #7 indicates to remove all or the part of the links between the non-AP MLD and the first AP MLD is not limited in embodiments of this application. For the specific manner, refer to related content of the request frame #4. Details are not described herein again.

It should be understood that the non-AP MLD may reuse an existing frame, for example, a link reconfiguration response (Link Reconfiguration Response) frame, as the request frame #7. This is not limited in embodiments of this application. A dialog token in the link reconfiguration response frame is set to 0.

In this implementation, after the first AP MLD completes transmission of the buffered data, the first AP MLD can actively remove all or the part of the links between the first AP MLD and the non-AP MLD, thereby shortening an interaction procedure and reducing signaling overheads.

FIG. 10 is a diagram of a communication method 300 according to an embodiment of this application. As shown in FIG. 10, the method 300 includes the following steps.

S310: A non-AP MLD sends a request frame #8 to a first AP MLD, and correspondingly, the first AP MLD receives the request frame #8. The request frame #8 is used to request to transfer one or more contexts of the non-AP MLD to a second AP MLD.

It should be understood that the request frame #8 may be an example of a first frame. For specific descriptions of the request frame #8, refer to related content in the request frame #1 in step S210. Details are not described herein again.

It should be noted that, when the request frame #8 is sent to the first AP MLD, a fifth field carried in the request frame #8 is set to a MAC address of the second AP MLD.

In this embodiment of this application, the request frame #8 can trigger the first AP MLD to perform subsequent steps, to transfer the one or more contexts of the non-AP MLD.

S320: Switch a data path of the non-AP MLD to the second AP MLD.

It should be understood that, for a specific manner of switching the data path of the non-AP MLD to the second AP MLD, refer to related content in step S230. Details are not described herein again. In a possible implementation, before step S320, the method 300 may further include the following step.

S315: After receiving the request frame #8, the first AP MLD stops sending uplink data to a distributed system.

Further, after the data path of the non-AP MLD is transferred to the second AP MLD, the first AP MLD transfers the one or more contexts of the non-AP MLD to the second AP MLD according to the following steps.

S330: The first AP MLD sends a response frame #3 to the second AP MLD, and correspondingly, the second AP MLD receives the response frame #3. The response frame #3 is used to include information about the one or more contexts of the non-AP MLD.

It should be understood that the response frame #3 may be an example of a fourth frame, and a specific name of the response frame #3 is not limited in embodiments of this application. For example, the response frame #1 may be a context transfer response (Context Transfer Response) frame.

It should be understood that, for specific information carried in the response frame #3, refer to related content in the response frame #1 in step S240. Details are not described herein again.

It should be understood that, after receiving the response frame #3, the second AP MLD may perform, based on the information carried in the response frame #3, data transmission of the uplink data and/or downlink data with the non-AP MLD by using the one or more contexts.

Optionally, after step S330, the first AP MLD may further receive an acknowledgment ACK frame of the response frame #3.

S340: The first AP MLD sends a response frame #4 (another example of a second frame) to the non-AP MLD, and correspondingly, the non-AP MLD receives the response frame #4. The response frame #4 indicates that the one or more contexts of the non-AP MLD are successfully transferred.

It should be understood that the response frame #4 may be an example of a fifth frame, and a specific name of the response frame #4 is not limited in embodiments of this application. For example, the response frame #4 may be a seamless roaming response (Seamless Roaming Response) frame.

It should be understood that, for specific information carried in the response frame #4, refer to related content in the response frame #2 in step S250. Details are not described herein again. Optionally, when the request frame #1 in step S310 includes the foregoing field #2, and the field #2 indicates that the second AP MLD is expected to reply with a response frame of the request frame #1, step S340 may be replaced with the following step (not shown in the figure).

S340b: The second AP MLD sends a response frame #4 to the non-AP MLD, and correspondingly, the non-AP MLD receives the response frame #4.

It is easy to understand that, when the response frame #4 is sent by the second AP MLD to the non-AP MLD, the response frame #3 in step S330 may be an example of the second frame.

Based on the foregoing solution, in a roaming scenario, the non-AP MLD can send the request frame #8 to the first AP MLD, so that the first AP MLD can transfer the data path of the non-AP MLD to the second AP MLD before completing transfer of the one or more contexts between non-AP MLDs, thereby reducing a data amount during data transmission that needs to be subsequently performed by the first AP MLD.

Optionally, after step S340 is completed, the method 300 may further include the following step (not shown in the figure).

S350: After the first AP MLD completes data transmission, remove all or a part of links between the first AP MLD and the non-AP MLD. It should be understood that, for a specific implementation of step S350, refer to related content in step S260. Details are not described herein again.

In a fast transition (Fast transition, FT) scenario, when roaming from a current AP MLD to a target AP MLD, the non-AP MLD needs to establish a new PTKSA with the target AP MLD. In view of this, an embodiment of this application further provides a communication method 400, to prevent the non-AP MLD from deleting the PTKSA between the non-AP MLD and the current AP MLD before the non-AP MLD is successfully reassociated with the target AP MLD, thereby ensuring successful switching of the non-AP MLD between the AP MLDs.

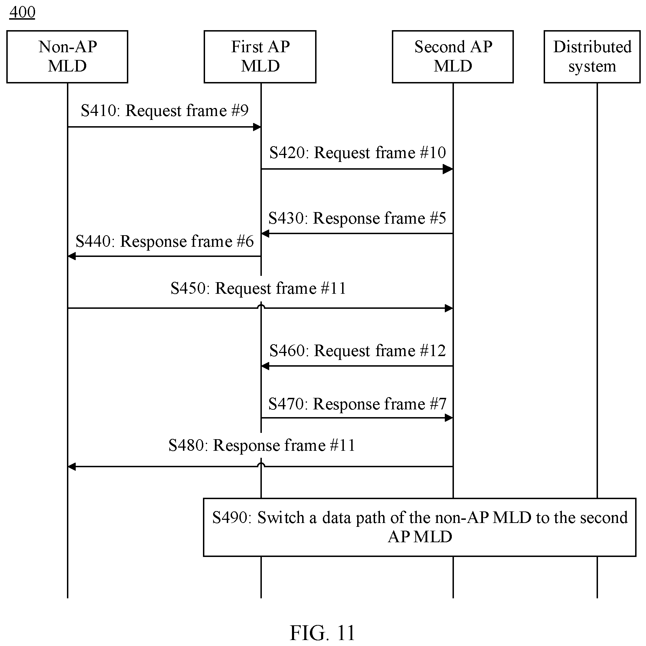

FIG. 11 is a diagram of a communication method 400 according to an embodiment of this application. As shown in the figure, the method 400 includes the following steps.

S410: A non-AP MLD sends a request frame #9 to a first AP MLD, and correspondingly, the first AP MLD receives the request frame #9. The request frame #9 is used to request to generate a pairwise transient key (pairwise transient key, PTK) between the non-AP MLD and a second AP MLD.

In this embodiment of this application, the request frame #9 may be a fast transition request (FT Request) frame. Specifically, the FT request frame includes a frame header and a frame body. The frame header includes a category (category) field, a fast transition (fast transition, FT) action (action) field, a transmitter address (transmitter address, TA) field, and a receiver address (receiver address, RA) field. For definitions and explanations of the fields in the fast transition request frame, refer to those in the institute of electrical and electronics engineers (institute of electrical and electronics engineers, IEEE) 802.11r protocol. Details are not described herein in this embodiment of this application.

It should be understood that the request frame #9 includes a MAC address of the second AP MLD. For example, the MAC address of the second AP MLD may be carried in the frame body of the request frame #9.

S420: The first AP MLD sends a request frame #10 to the second AP MLD, and correspondingly, the second AP MLD receives the request frame #10. The request frame #10 is used to request to generate the PTK between the non-AP MLD and the second AP MLD.

It should be understood that the request frame #10 may be an FT request frame, or the request frame #10 may be a new frame, for example, a remote request (Remote Request) frame, generated based on the FT request frame. This is not limited in embodiments of this application.

S430: The second AP MLD replies to the first AP MLD with a response frame #5, and correspondingly, the first AP MLD receives the response frame #5. The response frame #5 indicates whether authentication performed by the second AP MLD on the non-AP MLD succeeds. It should be understood that, after receiving the request frame #10, the second AP MLD performs authentication on a terminal in compliance with the IEEE 802.11r protocol. An authentication process is not described in detail in this embodiment of this application.

By way of example and not limitation, the response frame #5 may be a remote response (Remote Response) frame.

S440: The first AP MLD sends a response frame #6 to the non-AP MLD, and correspondingly, the non-AP MLD receives the response frame #6. The response frame #6 indicates whether authentication performed by the second AP MLD on the non-AP MLD succeeds.

By way of example and not limitation, the response frame #6 may be a fast transition response (FT Response) frame.

Further, when the response frame #6 indicates that authentication performed by the second AP MLD on the non-AP MLD succeeds, the non-AP MLD performs the following steps.

S450: The non-AP MLD sends a request frame #11 to the second AP MLD, and correspondingly, the second AP MLD receives the request frame #11. The request frame #11 is used to request to establish a security association between the non-AP MLD and the second AP MLD.

It should be understood that the non-AP MLD may reuse an existing frame as the request frame #11, or the non-AP MLD may use an additionally designed frame as the request frame #11. This is not limited in embodiments of this application.

By way of example and not limitation, the non-AP MLD may reuse a reassociation request (Reassociation Request) frame as the request frame #11. Specifically, a frame format of the reassociation request frame is shown in the following Table 1.

**Table 1 Frame format of the reassociation request frame**

| Sequence number | Information |
|---|---|
| 1 | Capability information (capability information) |
| 2 | Listen interval (listen interval) |
| 3 | Current AP address (current AP address) |
| 4 | Service set identifier (SSID) |
| 5 | Support rates and basic service set (basic service set, BSS) membership selectors (support rates and BSS membership selectors) |
| 6 | Extended support rates and BSS membership selectors (extended support rates and BSS membership selectors) |
| 7 | Power capability (power capability) |
| 8 | Supported channels (supported channels) |
| ... | ... |
| x | Mobility domain element MDE (Mobility Domain Element) |
| y | Fast transition element FTE (Fast Transition Element) |
| z | Basic multi-link element |
| o | Operating channel information OCI element (operating channel information) element |
| ... | ... |

In a possible implementation, the non-AP MLD may further add an additional field to the request frame #11, so that the request frame #11 is used to request to transfer one or more contexts of the non-AP MLD.

By way of example and not limitation, the request frame #11 further includes a field #5, and the field #5 may be a non-default transfer (non-default transfer) field. For specific descriptions of the non-default transfer field, refer to related content in the foregoing first field. This is not limited herein.

By way of example and not limitation, the request frame #11 further includes a field #6, and the field #6 indicates whether to perform data transmission. For specific descriptions of the field #6, refer to related content in the foregoing second field. This is not limited herein.

It should be understood that, when the request frame #11 includes the field #6, to enable data transmission, the first AP MLD can delete data in a buffer (for example, a transmit buffer and/or a reordering buffer) only after an MSDU is successfully transmitted.

It should be understood that a length and a ranking of the field #5 or the field #6 in the request frame #11 are not limited in embodiments of this application.

In a possible implementation, after the request frame #11 is sent, the method 400 further includes the following steps (not shown in the figure).

S455: The non-AP MLD stops sending uplink data to the first AP MLD.

It should be understood that a specific manner in which the non-AP MLD stops sending the uplink data to the first AP MLD is not limited in embodiments of this application.

By way of example and not limitation, after receiving an acknowledgment frame of the request frame #11, the non-AP MLD may stop sending the uplink data to the first AP MLD.

By way of example and not limitation, after a specific time period in which the request frame #11 is sent, the non-AP MLD may stop sending the uplink data to the first AP MLD. The specific time period is not limited in embodiments of this application.

S460: The second AP MLD sends a request frame #12 to the first AP MLD, and correspondingly, the first AP MLD receives the request frame #12.

It should be understood that, for specific descriptions of the request frame #12, refer to related content in the request frame #2. Details are not described herein again.

S470: The first AP MLD sends a response frame #7 to the second AP MLD, and correspondingly, the second AP MLD receives the response frame #7.

It should be understood that, for specific descriptions of the response frame #7, refer to related content in the foregoing response frame #1. Details are not described herein again.

In this embodiment of this application, before sending the response frame #7, the first AP MLD stops sending the uplink data to a distributed system, or the first AP MLD stops sending the MSDU to the distributed system.

Optionally, before sending the response frame #7, the first AP MLD further stops transmitting downlink data to the non-AP MLD.

S480: The second AP MLD sends a response frame #8 to the non-AP MLD, and correspondingly, the non-AP MLD receives the response frame #8. The response frame #8 indicates that the security association between the non-AP MLD and the second AP MLD is successfully established.

It should be understood that, that the one or more contexts of the non-AP MLD are successfully transferred may be considered as that a new PTKSA is successfully created between the non-AP MLD and the second AP MLD. Based on this, after determining that the one or more contexts of the non-AP MLD are successfully transferred, the non-AP MLD may delete a PTKSA between the non-AP MLD and the first AP MLD.

It should be understood that the second AP MLD may reuse an existing frame as the response frame #8, or the second AP MLD may use an additionally designed frame as the response frame #8. This is not limited in embodiments of this application.

By way of example and not limitation, the second AP MLD may reuse a reassociation response (Reassociation Response) frame as the response frame #8. Specifically, a frame format of the reassociation response frame may be shown in the following Table 2.

**Table 2 Frame format of the reassociation response frame**

| Sequence number | Information |
|---|---|
| 1 | Capability information (capability information) |
| 2 | Status code (status code) |
| 3 | Association identifier (AID) |
| 4 | Support rates and BSS membership selectors (support rates and BSS membership selectors) |
| 5 | Extended support rates and BSS membership selectors (extended support rates and BSS membership selectors) |
| 6 | EDCA parameter set |
| ... | ... |
| x | Mobility domain element MDE (Mobility Domain Element) |
| y | Fast transition element FTE (Fast Transition Element) |
| z | Basic multi-link element |
| o | Operating channel information OCI element (operating channel information) element |
| ... | ... |

It should be understood that, when the request frame #11 is further used to request to transfer the one or more contexts of the non-AP MLD, the response frame #8 may further indicate whether the one or more contexts of the non-AP MLD are successfully transferred.

Further, the second AP MLD may further indicate, in the response frame #8 for each TID, whether a corresponding context is successfully transferred. By way of example and not limitation, the second AP MLD may include a plurality of TIDs and a plurality of status codes in the response frame #8, to indicate whether the context corresponding to each TID is successfully transferred.

S490: Transfer a data path of the non-AP MLD to the second AP MLD.

It should be understood that a specific manner of transferring the data path of the non-AP MLD to the second AP MLD is not limited in embodiments of this application. For specific descriptions thereof, refer to related content in step S230. Details are not described herein again.

Based on the foregoing solution, after determining, by using the response frame #8, that the one or more contexts of the non-AP MLD are successfully transferred, the non-AP MLD can delete the PTKSA between the non-AP MLD and the first AP MLD, thereby ensuring successful switching of the non-AP MLD between the AP MLDs.

It may be understood that, after the non-AP MLD roams to the second AP MLD, in a scenario in which the second AP MLD expects (for example, because capabilities of the second AP MLD and the first AP MLD are inconsistent) to modify a parameter of one or more block acknowledgment sessions, if the related parameter is updated by deleting and reestablishing a session, both a transmitter and a receiver may release all block acknowledgment session resources, and consequently, packet loss occurs, which has great negative impact on transmission.

In view of this, an embodiment of this application further provides a method for updating a parameter related to a block acknowledgment session by an AP MLD, to avoid packet loss caused by deletion of the block acknowledgment session, thereby maintaining normal transmission.

For example, after a context is transferred according to the method 200 or the method 300, that is, after one or more contexts of a non-AP MLD are transferred to a second AP MLD (that is, after step S250 or step S340), the second AP MLD may send a request frame #13 to the non-AP MLD, and correspondingly, the non-AP MLD receives the request frame #13. The request frame #13 is used to request to update one or more parameters of the corresponding session.

It should be understood that a specific occasion on which the second AP MLD sends the request frame #13 is not limited in embodiments of this application.

By way of example and not limitation, the second AP MLD may send the request frame #13 to the non-AP MLD after receiving the foregoing response frame #2 or response frame #4.

By way of example and not limitation, the second AP MLD may send the request frame #13 to the non-AP MLD after a specific time period in which the one or more contexts are used for data transmission. The specific time period is not limited in embodiments of this application.

It should be understood that the second AP MLD may reuse an existing frame as the request frame #13, or the second AP MLD may use an additionally designed frame as the request frame #13. This is not limited in embodiments of this application.

By way of example and not limitation, the request frame #13 may be a multi-link operation update response (Multi-link Operation Update Response) frame. A dialog token field in the request frame #13 is set to 0.

By way of example and not limitation, the request frame #13 may be an unsolicited ADDBA request (Unsolicited ADDBA Request) frame.

By way of example and not limitation, the request frame #13 may be a link reconfiguration response (Link Reconfiguration Response) frame. A dialog token field in the request frame #13 is set to 0.

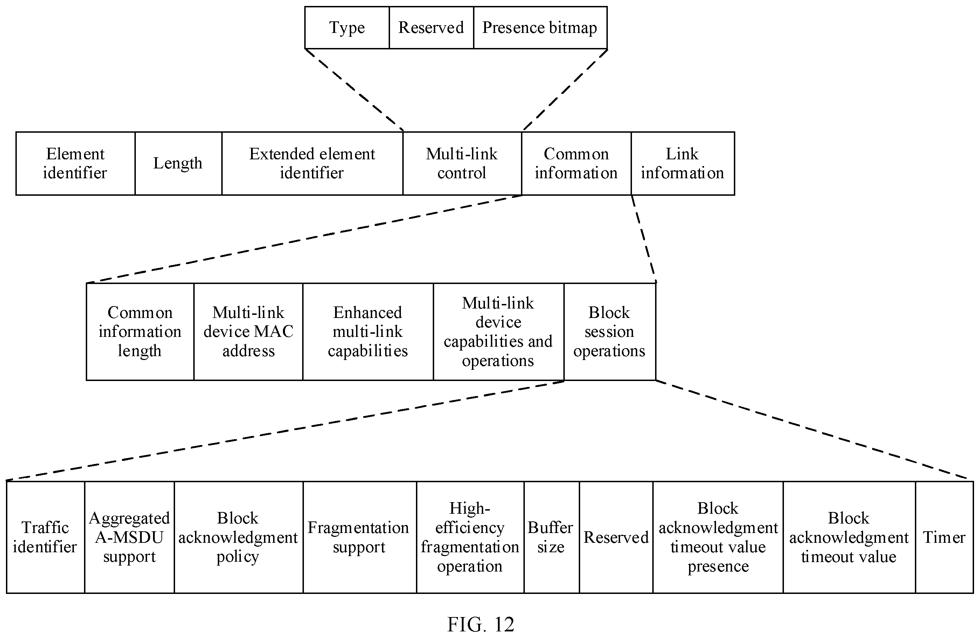

The following uses an example in which the request frame #13 is a multi-link operation update response frame for description. Specifically, a corresponding field may be added to a reconfiguration multi-link information element in the request frame #13. As shown in FIG. 12, block session operations (BA Operations) in a common information field may include at least one of the following:
a field #7, where the field #7 indicates a traffic identifier of the block acknowledgment session, to indicate that the parameter of the block acknowledgment session is expected to be updated, the field #7 may be 4 bits, and the field #7 may be a traffic identifier field;
an eighth field, where the eighth field indicates a buffer size, the eighth field may be 10 bits, and the eighth field may be a buffer size field;
a ninth field, where the ninth field indicates whether an A-MSDU is supported, or whether a transmitter is allowed to send the A-MSDU, the ninth field may be 1 bit, and the ninth field may be an aggregated A-MSDU support field;
a tenth field, where the tenth field indicates a block acknowledgment policy, the tenth field may be 1 bit, and the tenth field may be a block acknowledgment field;
an eleventh field, where the eleventh field indicates whether fragmentation is supported, the eleventh field may be 1 bit, and the eleventh field may be a fragmentation support field;
a twelfth field, where the twelfth field indicates whether an HE fragmentation operation is supported, the twelfth field may be 2 bits, and the twelfth field may be an efficient fragmentation operation field;
a thirteenth field, where the thirteenth field indicates a block acknowledgment timeout value, or the thirteenth field is used to negotiate the block acknowledgment timeout value with the non-AP MLD, the thirteenth field may be 16 bits, and the thirteenth field may be a block acknowledgment timeout value field;
a field #8, where the field #8 indicates block acknowledgment timeout value presence, the field #5 may be 1 bit, and the field #8 may be a block acknowledgment timeout value presence field; and
a field #9, where the field #9 is a timer field, indicates an effective time of a parameter in the request frame #13, to provide a preparation time for a receiver and the transmitter, thereby avoiding impact on data transmission, and the field #9 may be a timer field.

Optionally, the request frame #13 may further include a reserved field, to improve flexibility of updating the block acknowledgment session by using the request frame #13.

Based on the foregoing solution, the AP MLD can actively send the request frame #13, so that a specific parameter is updated without deleting the block acknowledgment session, and normal transmission between the AP MLD and the non-AP MLD is maintained.

It should be understood that the specific examples shown in FIG. 8 to FIG. 12 in embodiments of this application are merely intended to help a person skilled in the art better understand embodiments of this application, but are not intended to limit the scope of embodiments of this application. It should be further understood that sequence numbers of the foregoing processes do not mean an execution sequence. The execution sequence of the processes should be determined based on functions and internal logic of the processes, and should not be construed as any limitation on implementation processes of embodiments of this application.

It should be further understood that, in embodiments of this application, unless otherwise specified or there is a logic conflict, terms and/or descriptions in different embodiments are consistent and may be mutually referenced, and technical features in different embodiments may be combined based on an internal logical relationship thereof, to form a new embodiment.

It should be further understood that, in some of the foregoing embodiments, a device in an existing network architecture is mainly used as an example for description. It should be understood that, a specific form of the device is not limited in embodiments of this application. For example, all devices that can implement a same function in the future are applicable to embodiments of this application.

It may be understood that, in the foregoing method embodiments, methods and operations implemented by devices (for example, the access point multi-link device and the non-access point multi-link device) may alternatively be implemented by components (for example, chips or circuits) that can be used in the devices.

The foregoing describes in detail the communication methods provided in embodiments of this application with reference to FIG. 8 to FIG. 12. The foregoing communication method is mainly described from a perspective of interaction between the access point multi-link device and the non-access point multi-link device. It may be understood that, to implement the foregoing functions, the access point multi-link device and the non-access point multi-link device include corresponding hardware structures and/or software modules for performing the functions.

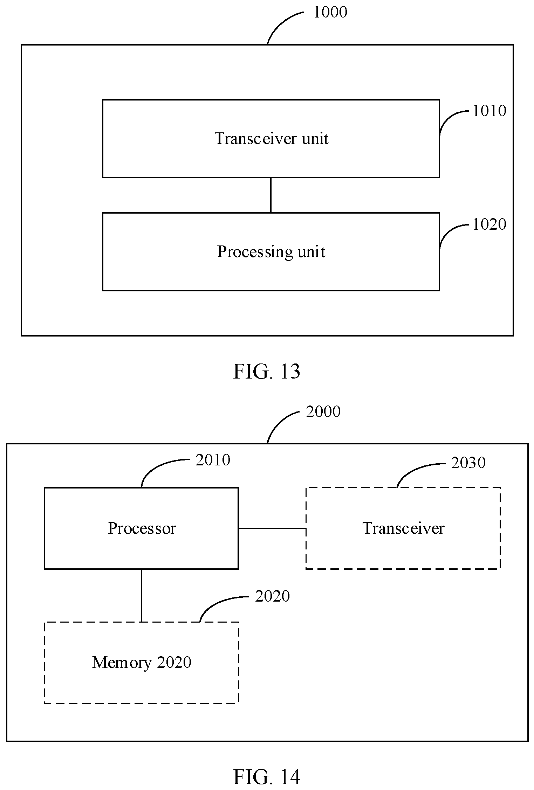

A person skilled in the art should be aware that units and algorithm steps in the examples described with reference to embodiments disclosed in this specification can be implemented by hardware or a combination of hardware and computer software in this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application. With reference to FIG. 13 and FIG. 14, the following describes in detail multi-link devices provided in embodiments of this application. It should be understood that descriptions of apparatus embodiments correspond to the descriptions of the method embodiments. Therefore, for content that is not described in detail, refer to the foregoing method embodiments. For brevity, a part of content is not described again.

In embodiments of this application, a transmitter device or a receiver device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division during actual implementation. The following uses an example in which each functional module is obtained through division based on each corresponding function for description.

FIG. 13 is a block diagram of an apparatus 1000 according to an embodiment of this application. The apparatus 1000 includes a transceiver unit 1010 and a processing unit 1020. The transceiver unit 1010 may implement a corresponding communication function, and the processing unit 1020 is configured to perform data processing. The transceiver unit 1010 may also be referred to as a communication interface or a communication unit.

Optionally, the apparatus 1000 may further include a storage unit. The storage unit may be configured to store instructions and/or data. The processing unit 1020 may read the instructions and/or the data in the storage unit, to enable the apparatus to implement the foregoing method embodiments.

The apparatus 1000 may be configured to perform actions performed by the multi-link devices (for example, the access point multi-link device and the non-access point multi-link device) in the foregoing method embodiments. In this case, the apparatus 1000 may be a multi-link device or a component that can be configured in the multi-link device. The transceiver unit 1010 is configured to perform sending and receiving related operations of the multi-link devices in the foregoing method embodiments. The processing unit 1020 is configured to perform processing related operations of the multi-link devices in the foregoing method embodiments.

In a design, the apparatus 1000 is configured to perform actions performed by the first AP MLD in the foregoing method embodiments.

In a possible implementation, the transceiver unit 1010 is configured to receive a first frame, where he first frame is used to request to transfer one or more contexts of a non-access point multi-link device non-AP MLD to a second AP MLD, and the non-AP MLD is associated with the first AP MLD. The processing unit 1020 is configured to transfer a data path of the non-AP MLD to the second AP MLD based on the first frame. The processing unit 1020 is further configured to transfer, after the data path of the non-AP MLD is transferred to the second AP MLD, the one or more contexts of the non-AP MLD to the second AP MLD based on the first frame.

In another design, the apparatus 1000 is configured to perform actions performed by the second AP MLD in the foregoing method embodiments.

In a possible implementation, the transceiver unit 1010 is configured to receive a seventh frame from a non-access point multi-link device non-AP MLD, where the seventh frame is used to request to transfer one or more contexts of the non-AP MLD to the second AP MLD, and the non-AP MLD is associated with a first AP MLD. The processing unit 1020 is configured to send a first frame to the first AP MLD based on the first frame, where the first frame is used to request to transfer the one or more contexts of the non-AP MLD to the second AP MLD. The transceiver unit 1010 is further configured to receive a fourth frame after a data path of the non-AP MLD is transferred to the second AP MLD, where the fourth frame includes information about the one or more contexts of the non-AP MLD.

In another possible implementation, the transceiver unit 1010 is configured to receive a third frame from a first AP MLD, where the third frame is used to request to transfer a data path of a non-access point multi-link device non-AP MLD to the second AP MLD, and the non-AP MLD is associated with a first AP MLD. The processing unit 1020 is configured to transfer the data path of the non-AP MLD to the second AP MLD based on the third frame. The transceiver unit 1010 is further configured to receive a fourth frame after the data path of the non-AP MLD is transferred to the second AP MLD, where the fourth frame includes information about one or more contexts of the non-AP MLD.

The apparatus 1000 may implement steps or procedures performed by the access point multi-link device (the first AP MLD or the second AP MLD) in the method embodiments in embodiments of this application. The apparatus 1000 may include units configured to perform methods performed by the access point multi-link device in the method embodiments. In addition, the units in the apparatus 1000 and the foregoing other operations and/or functions are separately used to implement corresponding procedures in the method embodiments of the access point multi-link device in the method embodiments.

It should be understood that a specific process in which the units perform the foregoing corresponding steps is described in detail in the foregoing method embodiments. For brevity, details are not described herein again.

In a design, the apparatus 1000 is configured to perform actions performed by the non-AP MLD in the foregoing method embodiments.

In a possible implementation, the transceiver unit 1010 is configured to send a first frame, where the first frame is used to request to transfer one or more contexts of the non-access point multi-link device non-AP MLD to a second AP MLD, and the non-AP MLD is associated with a first AP MLD.

The apparatus 1000 may implement steps or procedures performed by the non-access point multi-link device in the method embodiments in embodiments of this application. The apparatus 1000 may include units configured to perform methods performed by the non-access point multi-link device in the method embodiments. In addition, the units in the apparatus 1000 and the foregoing other operations and/or functions are separately used to implement corresponding procedures in the method embodiments of the non-access point multi-link device in the method embodiments. It should be understood that a specific process in which the units perform the foregoing corresponding steps is described in detail in the foregoing method embodiments. For brevity, details are not described herein again.

As shown in FIG. 14, an embodiment of this application further provides an apparatus 2000. The apparatus 2000 includes a processor 2010, and may further include one or more memories 2020. The processor 2010 is coupled to the memory 2020. The memory 2020 is configured to store a computer program or instructions and/or data. The processor 2010 is configured to execute the computer program or the instructions and/or the data stored in the memory 2020, so that the methods in the foregoing method embodiments are performed. Optionally, the apparatus 2000 includes one or more processors 2010.

Optionally, the memory 2020 and the processor 2010 may be integrated or separately disposed. Optionally, as shown in FIG. 14, the apparatus 2000 may further include a transceiver 2030. The transceiver 2030 is configured to receive a signal and/or send a signal. For example, the processor 2010 is configured to control the transceiver 2030 to receive the signal and/or send the signal.

In a solution, the apparatus 2000 is configured to implement operations performed by multi-link devices (for example, the access point multi-link device and the non-access point multi-link device) in the foregoing method embodiments.

An embodiment of this application further provides a computer-readable storage medium. The computer-readable storage medium stores computer instructions used to implement methods performed by the multi-link devices (for example, the access point multi-link device and the non-access point multi-link device) in the foregoing method embodiments.

For example, when the computer program is executed by a computer, the computer is enabled to implement the methods performed by the multi-link devices (for example, the access point multi-link device and the non-access point multi-link device) in the foregoing method embodiments. An embodiment of this application further provides a computer program product including instructions. When the instructions are executed by a computer, the computer is enabled to implement methods performed by the multi-link devices (for example, the access point multi-link device and the non-access point multi-link device) in the foregoing method embodiments.

An embodiment of this application further provides a communication system. The communication system includes the access point multi-link device and the non-access point multi-link device in the foregoing embodiments.

For explanations and beneficial effects of related content in any one of the apparatuses provided above, refer to a corresponding method embodiment provided above. Details are not described herein again.

It should be understood that the processor mentioned in embodiments of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, and the processor may alternatively be any conventional processor or the like.

It should be further understood that the memory mentioned in embodiments of this application may be a volatile memory and/or a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM). For example, the RAM may be used as an external cache. By way of example and not limitation, the RAM may include a plurality of the following forms: a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM).

It should be noted that, when the processor is a general-purpose processor, a DSP, an ASIC, an FPGA or another programmable logic device, a discrete gate or a transistor logic device, or a discrete hardware component, the memory (a storage module) may be integrated into the processor.

It should be further noted that the memory described in this specification is intended to include but is not limited to these and any other suitable type of memory.

A person of ordinary skill in the art may be aware that, in combination with the examples described in embodiments disclosed in this specification, units and steps can be implemented by electronic hardware or a combination of computer software and electronic hardware. Whether these functions are performed by hardware or software depends on particular applications and design constraints of the technical solutions. A person skilled in the art may use different methods to implement the described functions for each particular application, but it should not be considered that the implementation goes beyond the protection scope of this application.

In the several embodiments provided in this application, it should be understood that the disclosed apparatuses and methods may be implemented in other manners. For example, the described apparatus embodiments are merely examples. For example, division into the units is merely logical function division, and may be other division during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, that is, may be located in one position, or may be distributed on a plurality of network units. A part or all of the units may be selected based on actual requirements to implement the solutions provided in this application.

In addition, functional units in embodiments of this application may be integrated into one unit, each of the units may exist alone physically, or two or more units may be integrated into one unit. The foregoing embodiments may be all or partially implemented by software, hardware, firmware, or any combination thereof. When being implemented by the software, the foregoing embodiments may be all or partially implemented in a form of a computer program product. The computer program product includes one or more computer instructions. When the computer program instruction is loaded and executed on a computer, the procedure or functions according to embodiments of this application are all or partially generated. The computer may be a general-purpose computer, a dedicated computer, a computer network, or another programmable apparatus. For example, the computer may be a personal computer, a server, or a network device. The computer instruction may be stored in a computer-readable storage medium or may be transmitted from a computer-readable storage medium to another computer-readable storage medium. For example, the computer instruction may be transmitted from a website, computer, server, or data center to another website, computer, server, or data center in a wired (for example, a coaxial cable, an optical fiber, or a digital subscriber line (DSL)) or wireless (for example, infrared, radio, or microwave) manner. The computer-readable storage medium may be any usable medium accessible by a computer, or a data storage device, for example, a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like. For example, the usable medium may include but is not limited to any medium that can store program code, for example, a USB flash drive, a removable hard disk, a read-only memory (read-only memory, ROM), a random access memory (random access memory, RAM), a magnetic disk, or an optical disc.

## Claims

1. A communication method, comprising:
receiving, by a first access point multi-link device AP MLD, a first frame, wherein the first frame is used to request to transfer one or more contexts of a non-access point multi-link device non-AP MLD to a second AP MLD, and the non-AP MLD is associated with the first AP MLD;
transferring, by the first AP MLD, a data path of the non-AP MLD to the second AP MLD based on the first frame; and
after the data path of the non-AP MLD is transferred to the second AP MLD, transferring, by the first AP MLD, the one or more contexts of the non-AP MLD to the second AP MLD based on the first frame.

2. The method according to claim 1, wherein transferring, by the first AP MLD, the data path of the non-AP MLD to the second AP MLD based on the first frame comprises:
sending, by the first AP MLD, a second frame to a distributed system, wherein the second frame is used to transfer the data path of the non-AP MLD to the second AP MLD; or
sending, by the first AP MLD, the second frame to the second AP MLD, wherein the second frame is used to request the second AP MLD to send a third frame to the distributed system, and the third frame is used to transfer the data path of the non-AP MLD to the second AP MLD.

3. The method according to claim 1 or 2, wherein before transferring, by the first AP MLD, the data path of the non-AP MLD to the second AP MLD based on the first frame, the method further comprises:
stopping, by the first AP MLD, sending uplink data to the distributed system.

4. The method according to any one of claims 1 to 3, wherein transferring, by the first AP MLD, the one or more contexts of the non-AP MLD to the second AP MLD based on the first frame comprises:
sending, by the first AP MLD, a fourth frame to the second AP MLD, wherein the fourth frame comprises information about the one or more contexts of the non-AP MLD.

5. The method according to any one of claims 1 to 4, wherein the first frame comprises at least one of the following:
a first field, wherein the first field indicates to transfer all or a part of the contexts of the non-AP MLD;
a second field, wherein the second field indicates whether to perform data transmission of the uplink data and/or downlink data; or
a third field, wherein the third field indicates whether to transfer a security association context to the second AP MLD.

6. The method according to claim 5, wherein when the first frame comprises the first field, and the first field indicates to transfer the part of the contexts of the non-AP MLD, the first frame further comprises a fourth field, the fourth field comprises a plurality of bits, each bit corresponds to one traffic type, and each bit indicates whether a context of the corresponding traffic type needs to be transferred.

7. The method according to claim 5 or 6, wherein when the first frame comprises the third field, and the third field indicates to transfer the security association context to the second AP MLD, the one or more contexts of the non-AP MLD comprise the security association context.

8. The method according to any one of claims 1 to 7, wherein receiving, by the first AP MLD, the first frame comprises:
receiving, by the first AP MLD, the first frame from the non-AP MLD; or
receiving, by the first AP MLD, the first frame from the second AP MLD.

9. The method according to claim 8, wherein the first frame comprises a fifth field; and
the first frame is from the non-AP MLD, and the fifth field indicates an address of the second AP MLD; or
the first frame is from the second AP MLD, and the fifth field indicates an address of the non-AP MLD.

10. The method according to claim 8 or 9, wherein the first frame is from the non-AP MLD, and the method further comprises:
sending, by the first AP MLD, a fifth frame to the non-AP MLD, wherein the fifth frame indicates that the one or more contexts of the non-AP MLD are successfully transferred.

11. The method according to claim 10, wherein the fifth frame comprises a sixth field, and the sixth field indicates to remove one or more links between the first AP MLD and the non-AP MLD.

12. The method according to any one of claims 1 to 11, wherein the first frame further comprises a seventh field, and the seventh field indicates to switch one or more links between the second AP MLD and the non-AP MLD to an active mode.

13. The method according to any one of claims 1 to 12, wherein the method further comprises:
sending, by the first AP MLD, a sixth frame to the non-AP MLD, wherein the sixth frame indicates that buffered data of the first AP MLD has been transmitted, or the sixth frame is used to request to delete the one or more links between the first AP MLD and the non-AP MLD.

14. A communication method, comprising:
receiving, by a second access point multi-link device AP MLD, a seventh frame from a non-access point multi-link device non-AP MLD, wherein the seventh frame is used to request to transfer one or more contexts of the non-AP MLD to the second AP MLD, and the non-AP MLD is associated with a first AP MLD;
sending, by the second AP MLD, a first frame to the first AP MLD based on the seventh frame, wherein the first frame is used to request to transfer the one or more contexts of the non-AP MLD to the second AP MLD; and
receiving, by the second AP MLD, a fourth frame after a data path of the non-AP MLD is transferred to the second AP MLD, wherein the fourth frame comprises information about the one or more contexts of the non-AP MLD.

15. The method according to claim 14, wherein the method further comprises:
sending, by the second AP MLD, a fifth frame to the non-AP MLD, wherein the fifth frame indicates that the one or more contexts of the non-AP MLD are successfully transferred.

16. The method according to claim 14 or 15, wherein the first frame comprises at least one of the following:
a first field, wherein the first field indicates to transfer all or a part of the contexts of the non-AP MLD;
a second field, wherein the second field indicates whether to perform data transmission of uplink data and/or downlink data; or
a third field, wherein the third field indicates whether to transfer a security association context to the second AP MLD.

17. The method according to claim 16, wherein when the first frame comprises the first field, and the first field indicates to transfer the part of the contexts of the non-AP MLD, the first frame further comprises a fourth field, the fourth field comprises a plurality of bits, each bit corresponds to one traffic type, and each bit indicates whether a context of the corresponding traffic type needs to be transferred.

18. The method according to claim 16 or 17, wherein when the first frame comprises the third field, and the third field indicates to transfer the security association context to the second AP MLD, the one or more contexts of the non-AP MLD comprise the security association context.

19. The method according to any one of claims 16 to 18, wherein the fifth frame comprises a sixth field, and the sixth field indicates to remove one or more links between the first AP MLD and the non-AP MLD.

20. The method according to any one of claims 14 to 19, wherein the first frame further comprises a seventh field, and the seventh field indicates to switch one or more links between the first AP MLD and the second AP MLD to an active mode.

21. The method according to any one of claims 14 to 20, wherein the method further comprises:
sending, by the second AP MLD, an eighth frame to the non-AP MLD, wherein the eighth frame is used to request to update a block acknowledgment context in the one or more contexts.

22. The method according to claim 21, wherein the eighth frame comprises at least one of the following fields:
an eighth field, wherein the eighth field indicates a buffer size of a corresponding block acknowledgment session;
a ninth field, wherein the ninth field indicates whether a transmitter is allowed to send an aggregated MAC service data unit;
a tenth field, wherein the tenth field indicates a block acknowledgment policy of the corresponding block acknowledgment session;
an eleventh field, wherein the eleventh field indicates whether a fragmentation operation is allowed;
a twelfth field, wherein the twelfth field indicates whether a high-efficiency fragmentation operation is supported; and
a thirteenth field, wherein the thirteenth field indicates a timeout value of the corresponding block acknowledgment session.

23. The method according to claim 22, wherein the eighth frame further comprises a timer, and the timer indicates an effective time of the at least one field.

24. A communication method, comprising:
receiving, by a second access point multi-link device AP MLD, a second frame from a first AP MLD, wherein the second frame is used to request to transfer a data path of a non-access point multi-link device non-AP MLD to the second AP MLD, and the non-AP MLD is associated with the first AP MLD;
transferring, by the second AP MLD, the data path of the non-AP MLD to the second AP MLD based on the second frame; and
receiving, by the second AP MLD, a fourth frame after the data path of the non-AP MLD is transferred to the second AP MLD, wherein the fourth frame comprises information about one or more contexts of the non-AP MLD.

25. The method according to claim 24, wherein before receiving, by the second AP MLD, the third frame from the first AP MLD, the method further comprises:
receiving, by the second AP MLD, a seventh frame from the non-AP MLD, wherein the seventh frame is used to request to transfer the one or more contexts of the non-AP MLD to the second AP MLD; and
sending, by the second AP MLD, a first frame to the first AP MLD based on the seventh frame, wherein the seventh frame is used to request to transfer the one or more contexts of the non-AP MLD to the second AP MLD.

26. The method according to claim 24 or 25, wherein the method further comprises:
sending, by the second AP MLD, a fifth frame to the non-AP MLD, wherein the fifth frame indicates that the one or more contexts of the non-AP MLD are successfully transferred.

27. The method according to any one of claims 24 to 26, wherein the first frame comprises at least one of the following:
a first field, wherein the first field indicates to transfer all or a part of the contexts of the non-AP MLD;
a second field, wherein the second field indicates whether to perform data transmission of uplink data and/or downlink data; or
a third field, wherein the third field indicates whether to transfer a security association context to the second AP MLD.

28. The method according to claim 27, wherein when the first frame comprises the first field, and the first field indicates to transfer the part of the contexts of the non-AP MLD, the first frame further comprises a fourth field, the fourth field comprises a plurality of bits, each bit corresponds to one traffic type, and each bit indicates whether a context of the corresponding traffic type needs to be transferred.

29. The method according to claim 27 or 28, wherein when the first frame comprises the third field, and the third field indicates to transfer the security association context to the second AP MLD, the one or more contexts of the non-AP MLD comprise the security association context.

30. The method according to any one of claims 26 to 29, wherein the fifth frame comprises a sixth field, and the sixth field indicates to remove one or more links between the first AP MLD and the non-AP MLD.

31. The method according to any one of claims 24 to 30, wherein the first frame further comprises a seventh field, and the seventh field indicates to switch one or more links between the first AP MLD and the second AP MLD to an active mode.

32. The method according to any one of claims 24 to 31, wherein the method further comprises:
sending, by the second AP MLD, an eighth frame to the non-AP MLD, wherein the eighth frame is used to request to update a block acknowledgment context in the one or more contexts.

33. The method according to claim 32, wherein the eighth frame comprises at least one of the following fields:
an eighth field, wherein the eighth field indicates a buffer size of a corresponding block acknowledgment session;
a ninth field, wherein the ninth field indicates whether a transmitter is allowed to send an aggregated MAC service data unit;
a tenth field, wherein the tenth field indicates a block acknowledgment policy of the corresponding block acknowledgment session;
an eleventh field, wherein the eleventh field indicates whether a fragmentation operation is allowed;
a twelfth field, wherein the twelfth field indicates whether a high-efficiency fragmentation operation is supported; and
a thirteenth field, wherein the thirteenth field indicates a timeout value of the corresponding block acknowledgment session.

34. The method according to claim 33, wherein the eighth frame further comprises a timer, and the timer indicates an effective time of the at least one field.

35. A communication method, comprising:
sending, by a non-access point multi-link device non-AP MLD, a first frame, wherein the first frame is used to request to transfer one or more contexts of the non-AP MLD to a second access point multi-link device AP MLD; and
receiving, by the non-AP MLD, a fifth frame, wherein the fifth frame indicates that the one or more contexts of the non-AP MLD are successfully transferred.

36. A communication method, comprising:
sending, by a non-access point multi-link device non-AP MLD, a ninth frame to a second access point multi-link device AP MLD, wherein the ninth frame is used to request to establish a security association between the non-AP MLD and the second AP MLD, and the first AP MLD is associated with the non-AP MLD;
receiving, by the non-AP MLD, a tenth frame from the second AP MLD, wherein the tenth frame indicates that the security association between the non-AP MLD and the second AP MLD is successfully established; and
deleting, by the non-AP MLD, a security association between the non-AP MLD and the first AP MLD based on the tenth frame.

37. The method according to claim 36, wherein the ninth frame is further used to request to transfer one or more contexts of the non-AP MLD to the second AP MLD, the ninth frame comprises a first field and/or a second field, the first field indicates to transfer all or a part of the contexts of the non-AP MLD, and the second field indicates whether to perform data transmission of uplink data and/or downlink data.

38. The method according to claim 36 or 37, wherein the method further comprises:
after sending the ninth frame, stopping, by the non-AP MLD, sending the uplink data to the first AP MLD.

39. The method according to claim 36, wherein the tenth frame further indicates whether one or more contexts of the non-AP MLD are successfully transferred.

40. A communication method, comprising:
receiving, by a second access point multi-link device AP MLD, a ninth frame, wherein the ninth frame is used to request to establish a security association between the non-AP MLD and the second AP MLD, and the first AP MLD is associated with the non-AP MLD; and establishing, by the second AP MLD, the security association with the non-AP MLD based on the ninth frame; and
sending, by the second AP MLD, a tenth frame to the non-AP MLD, wherein the tenth frame indicates that the security association between the non-AP MLD and the second AP MLD is successfully established.

41. The method according to claim 40, wherein the ninth frame is further used to request to transfer one or more contexts of the non-AP MLD from the first AP MLD to the second AP MLD, the ninth frame comprises a first field and/or a second field, the first field indicates to transfer all or a part of the contexts of the non-AP MLD, and the second field indicates whether to perform data transmission of uplink data and/or downlink data.

42. The method according to claim 40, wherein the tenth frame further indicates whether the one or more contexts of the non-AP MLD are successfully transferred.

43. A communication apparatus, comprising a unit configured to perform the method according to any one of claims 1 to 42.

44. A communication apparatus, comprising a processor and a memory, wherein
the memory is configured to store computer program instructions; and
the processor is configured to execute the instructions, so that the method according to any one of claims 1 to 42 is performed.

45. A communication apparatus, comprising a logic circuit and an interface, wherein the logic circuit is coupled to the interface; and
the interface is configured to input and/or output code instructions, and the logic circuit is configured to execute the code instructions, so that the method according to any one of claims 1 to 42 is performed.

46. A computer-readable storage medium, wherein the computer-readable storage medium is configured to store a computer program, and when the computer program is executed, the method according to any one of claims 1 to 42 is performed.

47. A computer program, wherein when the computer program is executed, the method according to any one of claims 1 to 42 is performed.

48. A communication system, wherein the communication system comprises a first communication apparatus and a second communication apparatus, the first communication apparatus is configured to perform the method according to any one of claims 1 to 13, and the second communication apparatus is configured to perform the method according to any one of claims 14 to 23, or according to any one of claims 24 to 34, or according to any one of claims 40 to 42.

49. A communication system, wherein the communication system comprises a first access point multi-link device AP MLD and a second AP MLD, the first AP MLD is configured to perform the method according to any one of claims 1 to 13, and the second AP MLD is configured to perform the method according to any one of claims 14 to 25, or according to any one of claims 24 to 34, or according to any one of claims 40 to 42.
